# EUROPEAN PATENT SPECIFICATION

(11) **EP 1 657 610 B1**
(45) Date of publication and mention of the grant of the patent: **23.07.2014**
(21) Application number: 05024673.5
(22) Date of filing: 11.11.2005
(51) Int. Cl.: G05B 19/418, G06Q 10/00, G06Q 10/06

(54) **Asset maintenance or inspection system and method**
System und Verfahren zum Verwalten und Inspizieren von Anlagen
Système et procédé de gestion et d'inspection d'installations

(30) Priority: 12.11.2004 JP 2004329656
(43) Date of publication of application: 17.05.2006
(73) Proprietor: MITSUBISHI HEAVY INDUSTRIES, LTD., Tokyo (JP)
(72) Inventor: Sonoda, Yoshiaki Advanced Tech. Research Center, Kanauawa-ku Yokohama Kanagawa-ken (JP); Ono, Hidetaka Mitsubishi Heavy Industries, Ltd., Tokyo (JP); Shimada, Toyofumi Ryomei Engineering Co., Ltd., Hiroshima Hiroshima-ken (JP); Maddox, Edward P. jr., Reston VA 20194 (US)
(74) Representative: HOFFMANN EITLE

(56) References cited:
- WO-A1-96/27171
- WO-A2-02/17643
- JP-A- 11 134 369
- US-A1- 2002 112 247
- US-A1- 2003 041 109
- US-A1- 2003 195 934
- US-A1- 2004 093 102
- US-B1- 6 658 311

## Description

### [Technical field]

The present invention relates to an asset maintenance or inspection system and method in which a proper combination of four management software modules, a process management module, a procedure management module, a visual information management module, and a formmanagement module, is used, the combination being easily changed to configure a maintenance or inspection system in accordance with an asset scale.

Particularly, the present invention relates to asset maintenance or inspection system and method in which a mobile computer taken for maintenance work of an asset, such as various plants, machines and equipment, is used to display work procedures on the screen according to the process management on the server, to display drawings and data such as work history when necessary, to ask remote expert staff members for advice, and to record maintenance or inspection results along with site images in any format for creating a documentation database.

The present invention generally relates to an asset maintenance orinspectionsystem and method. The present invention specifically relates to an automated and computerized maintenance or inspection system and method for managing and tracking the maintenance or inspection work orders of assets.

### [Background technology]

The present invention is a further modification of the invention entitled "maintenance and inspection system and method" and filed in the prior application Patent Application 2004-56674 assigned to the same applicant, which had not been published when the patent application was filed. Most of the core part is shared. Therefore, the characteristics of the present application are described, while descriptions common with the prior application are recited.

In this specification, each technical term is used following definition.

"An asset" refers to an asset to be maintained or inspected using the maintenance or inspection system and method of the present invention, such as a variety of plants, machines, and equipment.
Assets can be classified according to their scale. Large scale assets include nuclear power plants and waste incineration plants.
Medium scale assets include machining centers and molding lines. Small scale assets include copy machines and air conditioning systems.

"Maintenance" refers to the management of an asset including process management and maintenance procedure management for supervising and maintaining the asset, whereby the intended performance, quality, and service of the asset during the design/production thereof are continuously provided. Management including process control is required for maintenance of large scale assets. Management focusing on procedure control is required for medium scale assets. Tasks mainly focusing on the creation of inspection reports to record the maintenance/safety control conditions of individual assets are required for small scale assets. The creation of inspection reports is also useful for maintenance of large and medium scale assets besides the maintenance of small scale assets.

"A first computer" is a center computer or a host server. For larger systems, it is sometimes configured in hierarchy. The hierarchy for example consists of "a work front server (or site server)" → "office server" → "headquarters master server." In some cases, multiple"work front servers (or site servers)" and "office servers" are provided. For example, multiple site servers may be provided at waste incineration plants in various locations. Multiple office servers may be provided at the Osaka, Nagoya, Sendai, and Hiroshima branches, with their headquarters being located in Tokyo.

"A second computer" is a remote user, or client, computer.
Generally, it is a mobile computer that a worker takes to asset maintenance sites with him. As a matter of course, the number of user computers increases according to the number of workers. In some cases it may be a desktop computer at an office site.

"A user" is a person who uses the second computer at a remote location. They may be either a maintenance worker or an expert staff member. "A user" refers to either, where distinction is unnecessary. "A worker" or "an expert staff member" is used where distinction is necessary.

"Amodule" or"a software module" is a series of procedures in computer program language to be executed on a computer for processing information/data in a pre-determined procedure. It is an element to construct a computer application program executable by itself. In some cases, a single module forms a computer program that can be launched and self-executed. In other cases, multiple modules form a computer program.

The "maintenance or inspection system" of the present invention organically combines or links software modules below. However, the software modules are not confined to exemplified specific software modules. Those having required functions in the present invention can be used.

Computerized Maintenance Systems (CMMS) include known conventional asset maintenance or inspection system. The CMMS is a tool for monitoring the operation of an asset and planning or scheduling inspections, maintenance, and repairs using a computer to meet the needs of modern plants and facilities. Using asset information (for example: application knowledge, tools, and databases), the CMMS software schedules maintenance, repair, and inspection of such assets. The CMMS software is used to notify operations personnel when maintenance is necessary and to schedule and track the execution of the required maintenance. The CMMS generally comprises process, task, facility, resource, and stock management functions. The present invention mainly uses process, task, and facility management functions. In this specification, a software module having these functions is termed"a computerized maintenance system" or "a process management module."

Examples of the CMMS software include "MAXIMO" (registered trademark) from Project Software & Development Incorporated of Cambridge, Massachusetts, USA; "DATASTREAM 7i" (registered trademark) from Datastream of Greenville, South Carolina, USA; and "PASSPORT" (registered trademark) from Indus International of San Francisco, California, USA, and any other suitable software packages can be used.

Electronic Performance Support Systems (ESPP) are also a known software application for improving both the quality and the speed of work by providing users with practicable, context-specific expertise and work instruction on demand and right at the point of work. The EPSS improves work performance by integrating into a portable, mobile paperless job aids and multiple forms of technical data such as procedures, equipment diagrams, instructive animation, or computer-based training clips, tips from experienced experts of the work subject, and other information resources. Multimedia such as refresher training clips are delivered in job-specific "task-base" clusters that follow specific job sequences. " Performance Support systems" are similar to Interactive Electronic Technical Manuals (IETM) . However, they provide users with richer information resources tailored to specific tasks and job roles. The present invention mainly uses the procedure management function and, in this specification, a software module having this function is termed"an electronic performance support system" or "a procedure management module."

Examples of the "EPSS" software include "MAIN-X" (registered trademark) from REI Systems of Annandale, Virginia, USA; "Knowledge Stream" (registered trademark) from Upstream Development, LLC of Milwaukee, Wisconsin USA; and "AWARE" (registered trademark) from Automated Technology Incorporated of San Jose, California, USA, and any other suitable software packages can be used.

Video Messaging Systems (VMS) are known software applications to allow a field technician to receive assistance from remote experts. Features of these software solutions include, in addition to live audio/image transport, real-time interaction tools such as simultaneous remote/host real-time video annotation, image cataloging and annotation, audio interaction, file transfer, and document sharing. Additional documentation capabilities include video capture and annotation for audio over video, text, and symbols. In the specification, a software module having this function is termed "an image messaging system" or "a visual information management module."

Examples of the "VMS" include "Remote Technical Assistance Support System: RTASS" (registered trademark) from Oxford Technologies of Friendswood, Texas, USA; "NetMeeting" (registered trademark) from Microsoft Corporation of Seattle, Washington, USA; "Instant Communicator" (registered trademark) from Userplane of Los Angeles, California, USA; and "Trillian Pro" (registered trademark) from Cerulean Studios of Connecticut, USA, and any other suitable software packages can be used.

Form management systems (FMS) support a function to automatically reproduce existing paper-based forms with data filled in by integrating electronic forms with data collected through the CMMS or EPSS and data exported or extracted from them. In this specification, a software module having the function is termed a "form management system" or "form management module."

Various vendors provide software products of CMMS, EPSS, VMS or FMS capabilities, currently provided in a stand-alone mode. Therefore, there is the critical inefficiency that a worker must move from one supporting software program to another while performing maintenance or inspection tasks. It is extremely cumbersome for a worker to use these different software programs in concert. Currently, a user has to open each software program independently and then navigate to a proper functional point and its content.
This requires various manipulations of windows, menu systems, data listings, and so on for respective scenes. For example, when a worker has a non-interacting or non-integrated system and needs assistance from a training video to repair a piece of equipment, the worker would have to close or minimize the currently open work order or procedure list before he starts another software program to view the training video.

With such asset maintenance, in conjunction with the troublesome software navigation described above, most workers are also required to collect data and take pictures of the asset and complete paper-based forms as part of the overall work process. Therefore, they must carry a bunch of paper document forms in addition to a mobile computer for executing CMSS, ESPP, VMS, and FMS software programs. Sometimes, a bundle of document forms is as thick as 10 cm or more. It is tremendously cumbersome for them to move from one inspection point to another along with the instrument and files. Furthermore, for example, a machine number that is part of the EPSS information displayed on the mobile computer and inspection point names must be copied in document forms. A paper that is hand-written at the maintenance site is brought back to the office after the maintenance work. Then, it is input through a software program for electronically maintaining inspection records that run on a desk-top computer at the office, requiring double works. These are tremendously cumbersome tasks.

As described above, various asset maintenance systems have been realized. Among them, "DATASTREAM 7i" (registered trademark) from Data Stream of Greenville, South Carolina, USA, is well known (Non Patent Document 1).

[Non Patent Document 1] http://www.wavefront.co.jp/system/d7i/

Document US 2004/0093102 discloses a process management system to maintain assets, that uses a database to store all information of the maintenance of an asset. A user can access the database with a PDA to retrieve inspection order for the assets. Nevertheless, the allocation of the maintenance schedule is done manually by a supervisor and all maintenance instructions are presented, in turn, to the technician, so that it is difficult to scale the information sent to the technician. Furthermore, as there is not a clear division of the application server of the system in modules, the proper reconfiguration of the system depending on the scale of the asset to be supervised is very complicated.

### [Disclosure of the invention]

### [Problems overcome by the invention]

As described above, software products of CMMS, EPSS, VMS or FMS capabilities have been provided. However, they are provided in a stand-alone mode. A purpose of the present invention is to eliminate the prior art shortcomings and provide asset maintenance or inspection system and method comprising a first computer and a second computer capable of mutual information exchange with the first computer, in which four management software modules, a process management module, a procedure management module, a visible information management module, and a form management module, are properly combined and the combination or linkage can be changed to easily configure a maintenance or inspection system in accordance with an asset scale.

Another purpose of the present invention is to provide an asset maintenance or inspection system and method in which efficient data exchange is performed among four management software modules, a process management module, a procedure management module, a visible information management module, and a form management module, to facilitate maintenance or inspection of an asset.

### [Problem resolution means]

The present invention provides an asset maintenance or inspection system comprising a first computer and a second computer capable of mutual information exchange with the first computer, characterized by the fact that the first and second computers are configured by a proper combination of four management software modules, a process management module, a procedure management module, a visual informationmanagement module, and a form management module, and the combination can be changed to easily configure a maintenance or inspection system in accordance with an asset scale.

The present invention further provides an asset maintenance or inspection system wherein four management software modules, a process management module, a procedure management module, a visual information management module, and a form management module, are properly combined and the combination can be changed to easily configure a maintenance or inspection system in accordance with an asset scale, characterized by the fact that a first computer is configured by a combination of four management software modules, a process management module, a procedure management module, a visual information management module, and a form management module, and a second computer capable of mutual information exchange with the first computer is configured by a combination of three management software modules, a procedure management module, a visual information management module, and a form management module.

The present invention further provides an asset maintenance or inspection system wherein three management software modules, a procedure management module, a visual information management module, and a form management module, are properly combined and the combination can be changed to easily configure a maintenance or inspection system in accordance with an asset scale, characterized by the fact that a first computer is configured by a combination of three management software modules, a procedure management module, a visual informationmanagement module, and a formmanagement module, and a second computer capable of mutual information exchange with the first computer is configured by at least a procedure management module in combination with either a visual information management module or a form management module.

The present invention further provides an asset maintenance or inspection system wherein three management software modules, a procedure management module, a visual information management module, and a form management module, are properly combined and the combination can be changed to easily configure a maintenance or inspection system in accordance with an asset scale, characterized by the fact that a first computer is configured by a combination of three management software modules, a procedure management module, a visual information management module, and a form management module, and a second computer capable of mutual information exchange with the first computer is configured by a combination of two management software modules, a visual information management module and a form management module.

The present invention further provides an asset maintenance or inspection method using a host computer and a portable mobile computer capable of mutual information exchange with the host computer, characterized by the fact that the host computer and mobile computer are configured by a proper combination of four management software modules, a process management module, a procedure management module, a visual information management module, and a form management module, the combination can be changed to configure a maintenance or inspection system in accordance with an asset scale, the host computer receives and stores for the mobile computer information such as maintenance procedure and forms to record inspection information of an asset to be maintained/inspected before maintenance/inspection work, and the mobile computer is used to read the stored information at the maintenance or inspection site for maintenance or inspection of an asset.

The present invention further provides an asset maintenance or inspection method using a host computer and a portable mobile computer capable of mutual information exchange with the host computer, characterized by the fact that the host computer and mobile computer are configured by a proper combination of four management software modules, a process management module, a procedure management module, a visual informationmanagement module, and a formmanagement module, the combination can be changed to easily configure a maintenance or inspection system in accordance with an asset scale, the host computer receives and stores for the mobile computer information such as maintenance procedure and forms to record inspection information of an asset to be maintained/inspected, which are scheduled through the process management module of the host computer, before maintenance/inspection work, and the mobile computer is used to read the stored maintenance procedure at the maintenance or inspection site for maintenance or inspection of an asset.

The present invention further provides an asset maintenance or inspection method characterized by the fact that when a work report must be made at a maintenance site, a stored pre-determined format is read using the form management module of the mobile computer, necessary data are filled therein, and then the created format is stored using the procedure management module of the mobile computer.

The present invention further provides an asset maintenance or inspection method using a host computer and a portable mobile computer capable of mutual information exchange with the host computer, characterized by the fact that the host computer and mobile computer utilize an asset maintenance or inspection system configured by an appropriate combination of four management software modules, a process management module, a procedure management module, a visual information management module, and a form management module, whereby the mobile computer taken for maintenance or inspection of an asset, such as various plants, machines, and equipment, can be used to display on the screen the work procedure according to the process control on the host, to timely display drawing and data such as work history when necessary, to ask remote expert staff members for advice, to store maintenance or inspection results and other information obtained at the side along with site images in any form for creating documentation data.

### [Effects of the invention]

The present invention provides a system configured by a proper combination of four management software modules, a process management module, a procedure management module, a visual information management module, and a form management module, essential functions for an asset maintenance or inspection system, so as to easily configure a system in accordance with the scale of an asset to be supervised.

The present invention provides a system configured by a proper combination of four management software modules, a process management module, a procedure management module, a visual information management module, and a form management module, essential for an asset maintenance or inspection system, to consolidate data exchange among the management software modules and achieve interactive maintenance work between a host computer and a mobile computer for the improved productivity and efficiency of maintenance work.

The present invention provides a system configured by a proper combination of four management software modules, a process management module, a procedure management module, a visual information management module, and a form management module, essential for an asset maintenance or inspection system, whereby information exchange among different management software modules is efficiently dispatched. The user can move from one element to another without opening each package according to the situation and navigating to a proper function/content to obtain a variety of information necessary for the work he is working on from the modules along a sequence of tasks on site. The overall usage is significantly simplified and improved.

In addition, the present invention allows a maintenance or inspection worker to work on an asset and, concurrently, complete necessary forms to create and output the forms required for a work report. Data is made available in electronic formats. Therefore, improved data trace and monitor function is obtained and significant improvement in productivity is expected. After inspection, a report is automatically created. Diversion of formally used data such as work procedure and document forms is easily applicable.

The present invention allows all participants who access the system to share work history and situation information with workers or experts on the host side or at remote locations and to know the current situation and work status (history) of maintenance work of a specific asset through the visual information management module. Therefore, information is shared by multiple workers and they save time in obtaining it. This eliminates the necessity of spending time to individually inform all participants of the maintenance workstatus, improving productively. Additionally, information on work history up to the present and matters and objects on which an experts' advice is required are precisely supplied to the host computer and expert staff members, which improves the quality of the assistance.

### [Preferred embodiments of the invention]

With the present invention, typical maintenance or inspection worker's daily activities are scheduled by the process management module and procedure management module of a host computer and directed by work orders assigned to each asset. Work orders created by the host computer tell the worker the asset or equipment to be maintained or inspected and the job to be performed. Work orders also may provide supporting information such as a simple list of steps or tasks and a list of parts concurrently or as appropriate. Work orders are generally generated and scheduled through the process management module and procedure management module of the host computer although they can be manually generated.

In the present invention, workers use the mobile computer provided to them to retrieve work orders from the host computer and to obtain the list of work orders assigned. In the list the worker reads or selects the work order he is currently working on, launches the procedure management module using the list or detailed format so as to automatically acquire a proper procedure for the work order and perform the procedure steps necessary for the maintenance work of an asset. However, these days asset maintenance work is not always performed by a skilled worker. Therefore, for complex inspection or maintenance tasks, basic information provided by the work order may not be sufficient for some worker techniques and experiences to complete the work order. In such cases, for each step, the worker can use the procedure management module and the visual information management module to previously receive and load onto his mobile computer or receive in real time from the host computer supporting information of the maintenance work such as additional descriptive information, location drawings, assembly drawings, circuits diagrams, parts list, warning and notices for safety or health, video clips, animation, and images.

For particular work orders, the worker is required to fill in a required form with data. Filling in a paper-based form during the maintenance work is particularly troublesome and time-consuming.
The present invention is provided with the form management module that allows the worker to collect and write data electronically on his mobile computer while each procedure step is performed. Furthermore, the worker can preview the form to confirm the completion while he is collecting data. After the planned procedure is completed, the form management module is used to write the data in the host computer for preparation of verification, approval, output, and storage of collected data.

With the form management module being provided, documents required to be created in maintenance of an asset are combined with collected data or data exported or extracted therefrom within the process management module, procedure management module, and visual information management module using recorded and stored electronic formats, which supports automated reproduction of existing paper-based forms with data filled in. To do so, as in the present invention, the process management module, procedure management module, and visual information management module should be linked via interfaces in the first and second computers.

In some cases, it is anticipated that the work procedure support through the procedure management module is not sufficient. For such cases, the present invention has the visual information management module that is launched from inside the procedure management module for guidance service by expert staff members. When the expert staff member guidance service is activated, the work step records completed up to then and data collected through the current work order/work procedure are displayed on the mobile computer of a supporting expert staff member through the visual information management module. Sharing the information with the worker, the supporting expert staff member immediately knows which maintenance step the worker currently is in, finds the way to complete the task, and give him instructions. The information shared by the worker and supporting expert staff member at least includes the header, procedure, and steps of the current work order. This information also allows the expert staff member helping the worker to launch the procedure management module and experience the same procedure and steps as the worker.

In embodiments of the present invention for realizing the present invention, universal work order interface modules that run on a mobile computer and communicate with conventional commercially available CMMS systems via an XML (extensible Markup Language) or custom interface can be used. Delivery, process, and update of work orders can be realized on a mobile computer by exchanging information with the host computer, which significantly reduces the overall work order cycle, leading to improved productivity and reduced cost.

The foregoing purposes, advantages, and efficacy of the present invention will become more apparent to those skilled in the art upon reading the following detailed description and preferred embodiments, together with the structural characteristics thereof, which were only briefly summarized in the preceding passages, and the illustration thereof presented in the representative accompanying drawings.

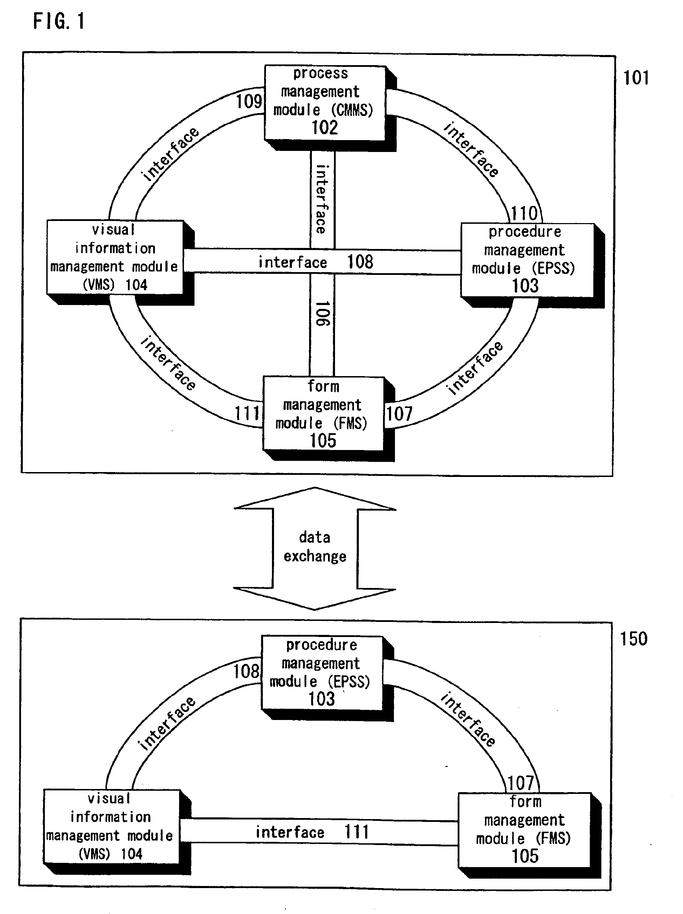

The present invention is described hereafter, with reference to the drawings and preferred embodiments. Fig.1 is a conceptual diagram of the software functions of a host computer 101 and a mobile computer 150, which form the maintenance or inspection system of the present invention. The host computer 101 comprises four management modules, a process management module 102, a procedure management module 103, a visual information management module 104, and a form management module 105. The modules can mutually communicate and transfer data via a process management/form management interface 106, a procedure management/form management interface 107, a procedure management/visual information management interface 108, a process management/visual information management interface 109, a process management/procedure management interface 110, and a visual information management/form management interface 111. The interfaces allows mutual data exchange and activation between the linked management software modules without navigating to a fresh start of the management software modules each time they are needed during the maintenance work.

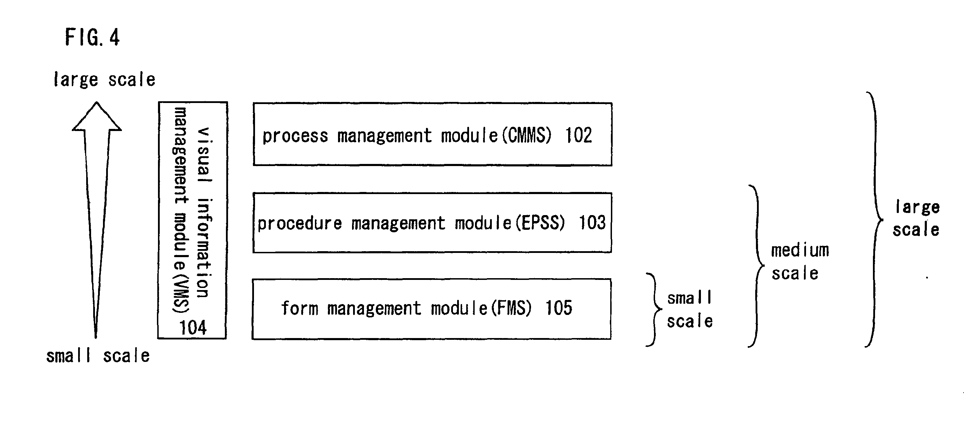

Fig.4 is a conceptual diagram of the maintenance or inspection system functions of the present invention in accordance with asset scales. For large scale assets such as nuclear power plants and waste incineration facilities, many workers have to work at the same time to achieve management including process controls. Therefore, the system essentially comprises the process management module 102 that is a tool for planning and scheduling inspections, maintenance, and repairs of assets. For medium scale assets such as machining and molding lines, a relatively small number of workers perform inspections, maintenance, and repair in pre-determined processes in many cases, whereby a management focusing on the procedure is required. Therefore, the system essentially comprises the procedure management module 103 that provides users with work procedures, schematic illustrations of machines, and instructive animation. Small scale assets such as copy machines and air conditioning systems are relatively small and there are not so many inspection points and procedure steps required for inspection. Many maintenance workers have knowledge of those matters in their head. In very few cases, the worker needs to confirm with the inspection procedure and drawings one by one. As far as he has a record form having a list of inspection points and space to write, a worker can perform his duty without using the wrong maintenance items or overlooking some of the items. In other words, management focusing on inspection forms/record forms is required. Therefore, the system essentially comprises the form management module software 105. The visual management module software 104 is useful for work support by remote expert staff members. Therefore, it can be used regardless of the asset scale.

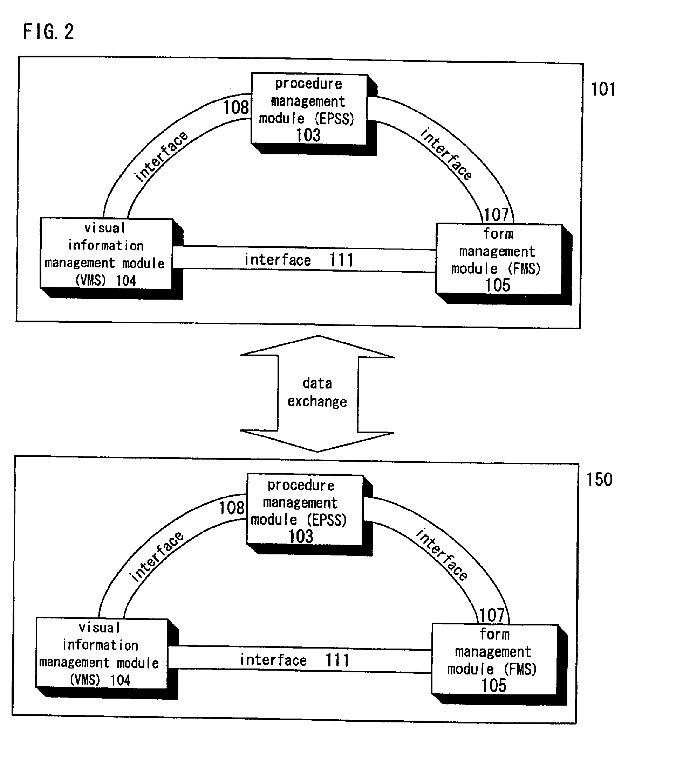

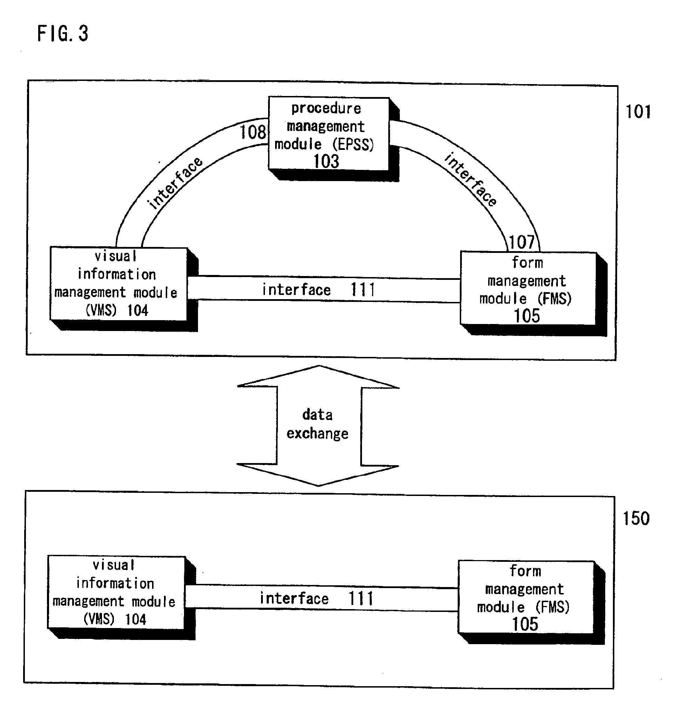

The configuration of the maintenance or inspection system of the present invention described above is shown as a conceptual configuration in accordance with asset scales. Fig.1 is a maintenance or inspection system suitable for large scale assets, such as nuclear power plants and waste incineration plants, where a large number of workers have to perform maintenance according topre-determinedprocesses. Here, the host computer has the process management module as a core element. Fig. 2 is a maintenance or inspection system suitable for medium scale assets, such as machining and molding lines, where workers and maintenance work are relatively patterned. This embodiment focuses on procedure management module 103. Fig. 3 is a maintenance or inspection system suitable for small scale assets, such as copy machines and air conditioning systems, where maintenance records must be created by the worker and assistance by expert staff members is rarely required. This is an embodiment focusing on the visual information management module 104 and form management module 105 for creating forms.

The asset maintenance or inspection system of the present invention is configured by properly selected management modules in accordance with an asset scale based on the knowledge that four management modules, a process management module, a procedure management module, a visual information management module, and a form management module, are essential. The host computer may be configured by all the four management modules, a process management module, a procedure management module, a visual information management module, and a form management module, or by three management modules, a procedure management module, a visual information management module, and a form management module, excluding a process management module. The mobile computer may be configured by three management modules, a procedure management module, a visual information management module, and a form management module, by two management modules, a procedure management module and a visual information management module, by two management modules, a procedure management module and a form management module, or by two management modules, a visual information management module and a form management module. These configurations are easily selected in accordance with the scale of an asset to be maintained and its usage. Software modules in the conceptual configuration diagrams are shown by boxes with each software function therein. Those do not illustrate actually loaded clusters of software.

Here again, the conceptual configuration of the maintenance or inspection system of the present invention is described with reference to Fig.1, which consists of a combination of a server site computer system configuration and a remote user site computer system configuration. A host server 101 of the server site computer system is configured by installing two to four software modules among a process management module 102, a procedure management module 103, a visual information management module 104, and a form management module 105. The remote user site computer system is configured by installing two to three software modules among a procedure management module 103, a visual information management module 104, and a form management module 105. The process management module 102 is installed on the server site computer for effectively functioning over the entire combination system. However, it is not installed on the remote user site mobile computer for creating a reduced system load configuration. The remote user site mobile computer can receive information from the server computer via proper communication media such as LAN or Internet. Remote users install and set up these management modules on their mobile computers as client software to access the entire host system.

The process management module, procedure management module, visual information management module, and form management module used in the maintenance or inspection system of the present invention are substantially equal to the modules described in the invention of the prior application. Their explanation is hereafter given as common technology to the present invention and the invention of the prior application.

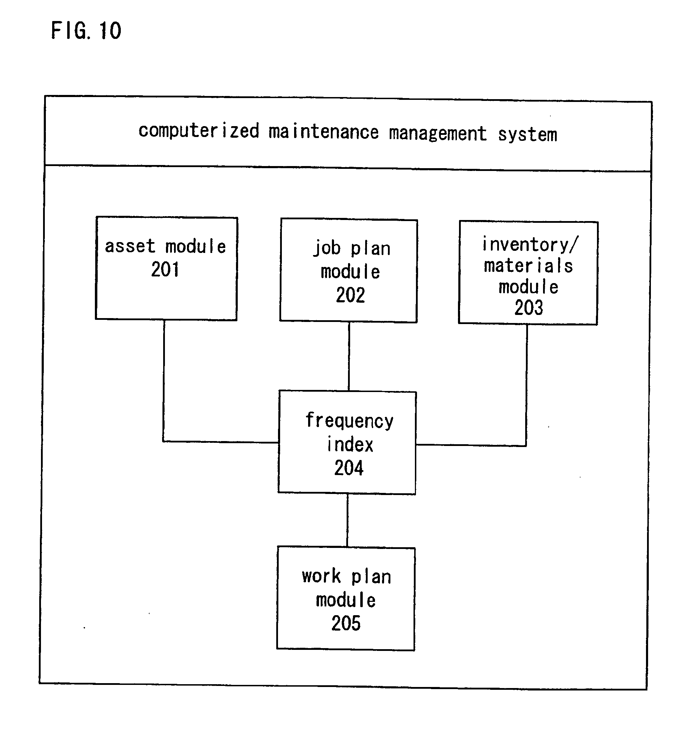

Corresponding to Fig.2 of the invention of the prior application, Fig.10 shows a computerized maintenance system comprising a preferred embodiment of the process management module mounted on the server site computer of the present invention. This module is used to supervise and track maintenance or inspection work orders of an asset step by step. In order to perform this function, the module comprises several sub-elements to be executed on the host server and several remote sub-elements to be executed on the mobile computer. The host server elements include an asset module 201, a job schedule module 202, a stock/resources module 203, a frequency index 204, and a work planning module 205.

The asset module 201 includes a function to allow users to maintain comprehensive asset catalogues, which include the inventories of equipment to be inspected, maintained, or repaired. The inventories may contain individual asset identification and reference information such as descriptions, serial numbers, model numbers, and supplier and parts data. This module also may include location and equipment hierarchy specification information. The asset module also can be used for monitoring the usage rate of equipment (equipment running time and mileage per unit).

The job schedule module 202 includes a function to allow users to create standard job schedules for maintenance or inspection tasks. This module supports the function to establish job schedules/standards or maintenance/inspection task standards, including job identification, assignment of necessary steps, and selection of resources, tools, and parts in stock, necessary to perform the job.

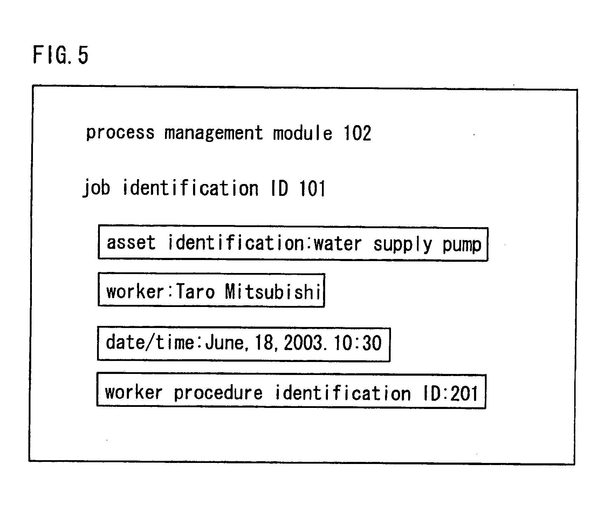

In embodiments of the present invention based on the invention of the prior application, jobs specifically define who (which worker) performs what work on which asset, how and when (date, year, time) . In the present invention, the following information is used as job identification IDs for efficiently achieving asset maintenance or inspection. First, a unique job identification ID is given to a task on an asset. A job identification ID is uniquely assigned in the system. For example, Fig.5 shows the content of a job identification ID "101." The job identification ID "101" shown in Fig.5 has an asset identification "water supply pump," a worker "Taro Mitsubishi," date/time "June 18, 2003, 10:30," and a work procedure identification ID "201."

The stock/resources module 203 includes a function to allow users to set up a complete inventory management system linked to maintenance programs. All details including vendors, storing, retrieving, and stock control can be input and maintained. Resource requests can be associated with respective jobs to ensure resources when a work order is created and approved for issue. The work order may be issued only when necessary items are in stock.

In embodiments of the present invention based on the invention of the prior application, the function that allows users to set up a complete inventory management system linked to maintenance programs is specifically a function to, for example in regular maintenance of a copy machine where an electrostatic drum or a fixing device should be exchanged upon regular inspection after it is used for a certain period of time, given that a maintenance schedule of the client' s printer is input in the maintenance programs, allow the maintenance programs to automatically order through the inventory management system necessary parts for a client' s printer prior to regular inspections and ensure that the exchangeable parts are delivered by the inspection day. The resource requests involve an electrostatic drums or a fixing device in this example.

The frequency index 204 is used to establish amaintenance/inspection schedule through a periodic maintenance reference. With this reference, all the assets (equipment) in the asset module are linked to j obs in the j ob schedule module. The asset/job pair is then given execution frequency. The frequency is determined based on the running rate or time (such as 3 months or 3000 miles).

In embodiments of the present invention based on the invention of the prior application, the frequency index 204 is specifically three months for the running time of an electrostatic drum that has to be exchanged after a certain period of time in case of a copy machine above and 3000 miles for the regular inspection mileage of a truck.

The work planning module 205 includes a function to allow users to create and monitor maintenance work orders. The work module function reflects the concept that all works should be controlled by work orders. Work orders are created according to correction of general maintenance or inspection schedules (using regular maintenance reference), emergency work requests, or the outcome of inspections. This module supports the function to create temporal work requests for corrective and emergency inspection and maintenance, which becomes work orders when approved. This module also supports the function to create systematic work orders for regular inspections and prevention/safety control. Once work orders are created, the module is used to approve their execution, assignment and then tracking.

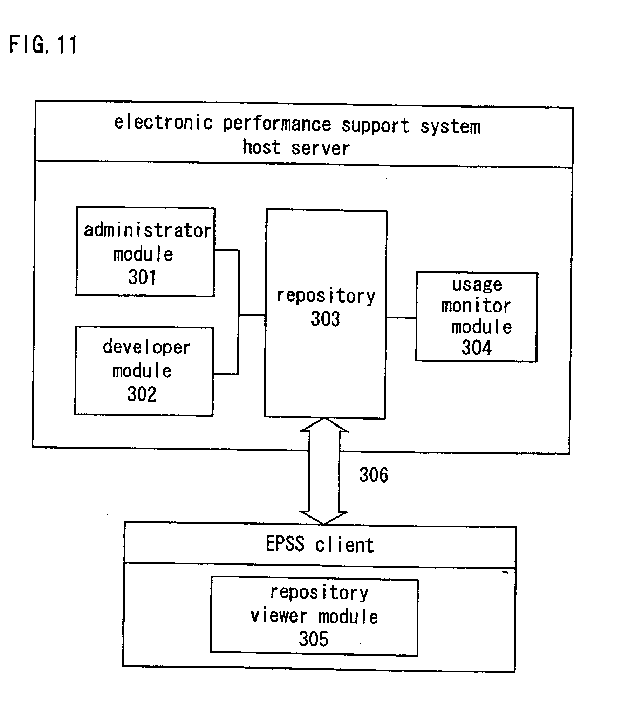

Corresponding to Fig.3 of the invention of the prior application, Fig.11 shows an electronic performance support system comprising a preferred embodiment of the procedure management module element mounted on the server computer of the present invention. This module is a core element of the management and inspection system and the most important means to support remote maintenance or inspection users. The module is primarily aimed at replacing complex paper-based or electronic-based technical documents with electronic interactive multimedia supported task/work order procedure based documents accessible from remote user computers. To achieve this, the module comprises several sub-elements on the host server and several remote sub-elements that run on the user computer. The sub-elements that run on the host server include an administrator module 301, a developer module 302, a repository 303, and a usage monitor module 304. The sub-elements that run on the client side include a repository viewer module 305.

The administrator module 301 is used to administrate users, devices, and permissions. This module is used to disclose the current content to the repository and send update to remote user devices where applicable. The module also is used when system users and their permissions are established.

In embodiments of the present invention based on the invention of the prior application, the administrator module 301 is specifically a module to register the name, password, and mobile computer identifier for remote use of a new remote user as a set and determine whether a view request for a specific content is certainly from a remote user who is a registered and certified.

The developer module 302 has a function of authoring or content management. This includes a function to create content/topic outlines or a full table of data editing, displaying, and accessing method. The developer module supports the function to create electronic procedures or job schedules at proper points within the topic outline, identify the required steps, and identify/link all proper support material. This includes input of annotations necessary for the step and any related warnings and characteristics contingent to the step. The link includes related technical material, diagrams, parts lists, technical advice, videoclips, and inspection points.

In embodiments of the present invention based on the invention of the prior application, the developer module 302 specifically has a function to, in disassembly and inspection work of a gas turbine, electronically input a work procedure required for the disassembly and inspection work step by step using an screen image per unit work, and link the respective screen images of the work procedure to electronic related information that becomes necessary at each procedure, such as drawings of bolts positions that must be removed, which are referred to for removing a housing, a video file to show the removing order by animation, and a list of exchangeable parts that must be exchanged as appropriate during the inspection work.

The repository module 303 is a current library or a database of related reference information. The repository contains technical material, procedures, circuit diagrams, images, documents, video, and sound. The repository is directly accessed by client software or exported for remote users.

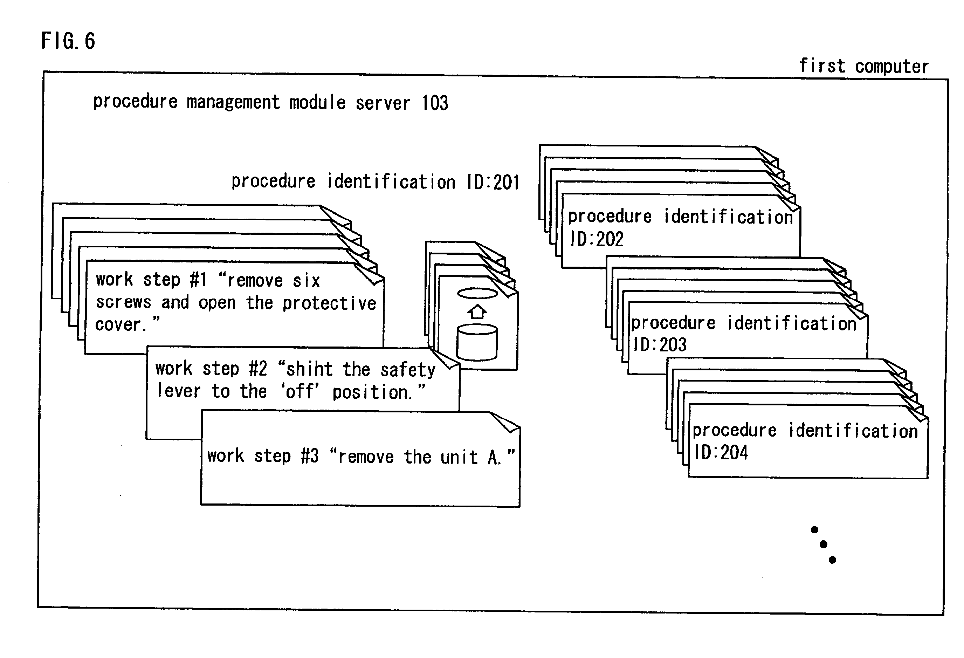

In embodiments of the present invention based on the invention of the prior application, as shown in Fig. 6, a figure of bolt positions referred to for removing a housing and a video file for showing the removing order in animation are specifically stored in the repository 303 of the first computer. Here, the work procedure information for respective work procedure IDs is stored in the repository module 303.

The usage monitor module 304 is used to monitor the usage of the system/repository by client viewer software. Monitoring is intended to support the manager or supervisor functions. This is used not only to maintain statistics of the usage of client users, but also to review and transfer any remarks, comments, or updates from clients.

In embodiments of the present invention based on the invention of the prior application, in addition to a function to record time information, such as the times when remote users access / execute the procedures and which information in the repository is viewed and when remote users find that information such as the contents given as the procedure and linked drawings conflict with actual things during the work, they give a notice to users of the developer module and supervisor module and encourage them to correct/update the contents.

Fig.11 also shows sub-elements of the remote computer of the electronic performance support system. The corresponding mobile computer sub-elements include a repository viewer module 305 that communicates with the host server via an interface 306 and is used by maintenance/inspection users during the work order execution support. This module converts an actual work order from the host computer to an interactive job on the mobile device. The module provides the user detailed procedure steps necessary for completing the work order. Each step is enhanced by linking to images, video, sound, or technical material. Measurements are stored and can be compared with past records or a certain range of tolerances. This element also supports the function to complete and return a result report of the work order to the host computer system.

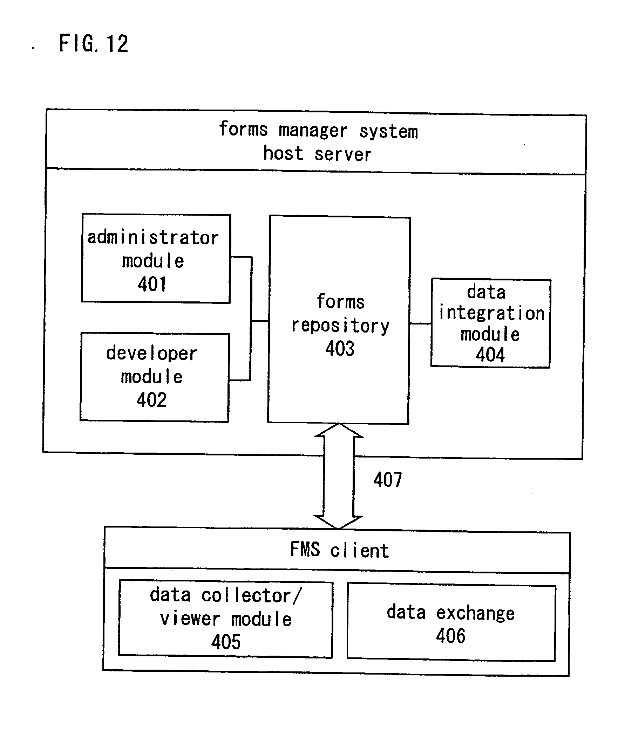

Corresponding to Fig.4 of the invention of the prior application, Fig. 12 shows a form management system that is a preferred embodiment of the form management module mounted on the server site computer of the present invention. The form management system overcomes basic shortcomings of both the computerized maintenance system and the electronic performance support system. Neither the computerized maintenance system nor the electronic performance support system fails to readily support the collection of a specific work order or inspection data and the output of documents in pre-determined forms, required by user organizations of the system, regulatory agencies or supervisory authorities, or other interested parties. Those forms generally require input information that is not necessarily required in the computerized maintenance system and electronic performance support system. These forms may require pre-determined formats including text, input boxes, table data, and images.

The computerized maintenance system has standard forms for assigning work orders and collecting data. Users often collect additional information and fill in an additional form during the inspection and maintenance work. These things are not ensured in standard electronic performance support systems. The electronic performance support system provides comprehensive job guidance, but is not linked to a particular work order. The form management system is used to create client-based electronic and paper forms that are necessary for documentation of inspection or maintenance work results. In both the invention of the prior application and the present invention, the purpose is to allow remote users to directly input on the form or to collect information through steps within the electronic performance support system and to store a completed form when all the steps are over.

In embodiments of the present invention based on the invention of the prior application, specifically, for example in the course of the ten-step regular inspection procedure of a windmill where each part of the windmill has to be checked for loosened bolts, the form management module is launched to display an electronic form through the loosened bolts check procedure screen. Then, a remote user checks the bolts of each part listed in the electronic form and records whether or not they are loosened or how many of them are loosened. At another work step, an instruction is given to lubricate parts and input of the record of lubricated parts is urged.
Finally, when the entire procedure is completed, the forms required to be filled in for this procedure are all filled in. Consequently, the forms can be stored as completed forms that can be designated as the work is completed.

In order to automatically integrate forms into the maintenance or inspection process, the form management system has several sub-elements on the host server and several remote sub-elements that run on the user computer. It also includes enhancement/integration by the computerized maintenance system and/or the electronic performance support system. The sub-elements that run on the host server include an administrator module 401, a developer module 402, a form repository 403, and a form data integration module 404. The sub-elements that run on the remote client include a form data collection/viewer module 405 and a form data exchange module 406. The enhancement for either the computerized maintenance system or the electronic performance support system can include the addition of data collection and data exchange functions.

The administrator module 401 is used to supervise users and permissions. This module is also used to disclose the current form contents to the form repository and send updates to the remote user devices where applicable.

The developer module 402 allows users to supervise form templates, metadata properties, form layouts, and data mapping. Metadata/header information about the forms (identification information, contents description, standard job/procedure identification, creation date, latest update version number, and other attribute information) is stored in a database. This module also has an authoring function to develop layouts for form templates. The authoring function may incorporate the XML (extensible Markup Language) technology, which is a markup language for describing the meanings and structures of documents and data. In the explanation below, theXMLisused by way of example. However, other suitable means can be used. Forms are stored in the XML format.
This module allows users to create or import XML-based forms. Each form can be stored in a database or as an independent file. This module also supports the function to trace the version of forms for enhancing the editing and update process. Each form has a series of data collection points. "Tags" or identifiers particular to related input areas, lines, boxes, or table cells are assigned to a series of data collection points on a form. These tags allow for the mapping between the form and the collected data.

In embodiments of the present invention based on the invention of the prior application, specifically, electronic forms are created as follows. An asset number, an asset name, an inspection/record worker, and for the example of a windmill above, the positions and number of bolts to be checked, location, numerical criteria to determine whether the bolt is loosened are provided on a form as character strings. Spaces can be provided to record actual check results. For these spaces, in order to facilitate electronic input, a list of numbers to be input is previously given, whereby a character string (a place or a number) to be input is selected using a pointer without typing on the key-board. Tags or identifiers can be assigned to all the spaces so as to associate the paces with cells, whereby the input data is certainly stored in a specific cell of a specific table in the database. Consequently, the input data is stored in a XML (eXtended Memory Specification) file having the setting above along with other information or only the data having tags or identifiers are automatically stored in the database later.

The form repository module 403 is the current library or database of all the form templates and all the completed forms presented from fields.

The form data integration module 404 is an interface for collecting and viewing of forms and form data submissions from remote clients. This module allows for online review, print, and archiving of the completed forms.

The "FMS" host server communicates with form management system clients via an interface 407. Actual form data is collected at the form management system remote clients. A preferred collection method is a specific form management system or a remote client form data collection/viewer module 405. This client will present a selected form to remote users that have the capability of online input of form data in a form facsimile on the remote device. The data is stored in the XML format and presented to the form management system host for review and output. In addition, the module integrates the XML based form template with the XML based form data to create a data loaded form which can be output.

In embodiments of the present invention based on the invention of the prior application, specifically, inspection data input through a remote client using a XML based form template, then collected to the form management module host server through communication between the formmanagement module host server and the formmanagement module remote client, and stored in the database is, upon request from a form management module user, refilled in the proper input cells of a XML based form template stored in the database and displayed on the host server screen in a meaningful form to the user for understanding.

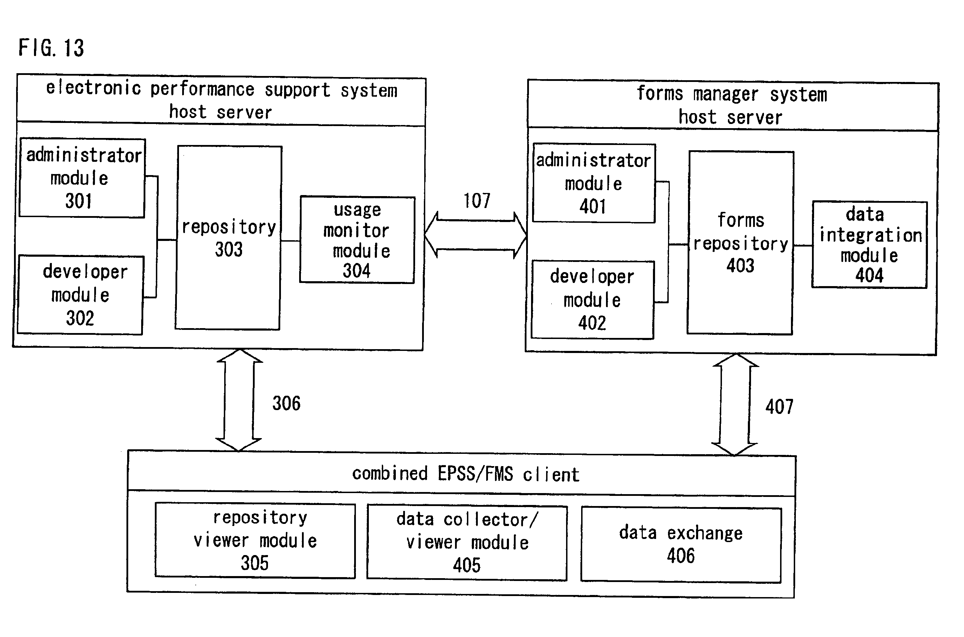

Another embodiment includes enhancement of the computerized maintenance system or electronic performance support system for supporting the function to create a user-defined data input combined with work orders and/or procedure steps later. Corresponding to Fig.5 of the invention of the prior application, Fig.13 shows a form management system element having a combined electronic performance support system/form management system (client). The electronic performance support system host server and form management system host server are similarly explained to Figs. 11 and 12 above, respectively. The same particular tags as created for forms of the developer module of the form management system, or tags that are mapped to the particular tags are attached to input data. These tags are coupled to user-collected input data for creating a XML data file, presented to the form management system (host server) for review and output. The computerized management system/electronic performance support system (host server) of this embodiment shares the form templates and form data mapping information of the formmanagement system. These are coupled to particular procedures. The information is in the repository, supporting data collection, data coupling, and viewing on the combined electronic performance support system/form management system or computerized management system/form management system (client).

In embodiments of the present invention based on the invention of the prior application, specifically, in the example of the windmill above where one procedure comprises 10 work steps and a record form for loosened bolts inspection and a record form for lubricant oil filling check record are used in the second step, these two forms are stored in the form depository and the link information among the procedure, work steps, and two forms is stored in the repository. The combined electronic performance support system/form management system (client) or the computerized maintenance system/form management system (client) is presented with these two pieces of information, work procedure, and two forms in the linked manner by the electronic performance support system server and form management system host server.

The data exchange module 406 is used to present all the collected data to the data integrate module 404 of the host form management system. All the data is in the XML format. As presented, the collected data is combined with a form template by the data integrate module for review, approval, output, and archiving.

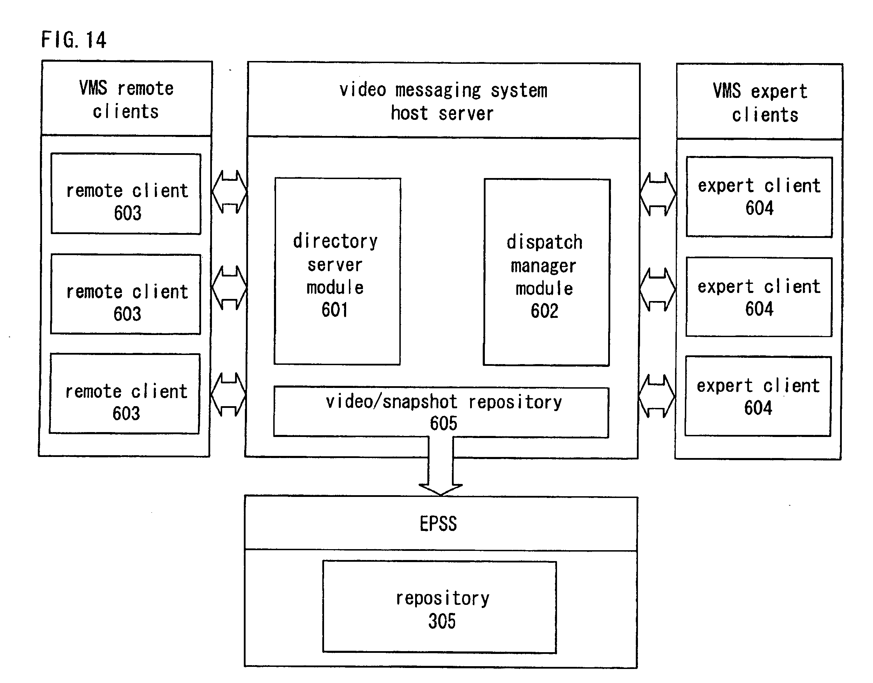

Corresponding to Fig.6 of the invention of the prior application, Fig.14 shows a video messaging system to provide real-time online support to the field worker. The video messaging system is essential for extensive maintenance or inspection applications where the material plant and/or equipment to be maintained or inspected at the site is significantly distant from the center. By making the knowledge of expert staff members at the remote host server available on the mobile computer, the overall work order cycle is significantly reduced, which leads to further improved productivity and reduced cost. To achieve this, the video messaging system comprises host server sub-elements and remote sub-elements that run on the user computer. The host server sub-elements include a directory server 601 and a dispatcher manager 602. The remote user sub-elements include a remote user client 603 and an expert user client 604.

The directory sever module 601 is used to supervise and monitor the entire video messaging system. This module provides a full time directory or list of video messaging system users. It monitors who is logged on and who is not. It includes basic identification information about each user and crucial address information for each user's remote device. The video messaging system supports two basic communicationmodes. As shown in Fig. 14, all the communication goes through the video messaging system host server.

The dispatcher manager module 602 is used to supervise sessions within the video messaging system. A session is initiated when either a client remote user or a host expert user attempts to use the video messaging system. Typically, when a remote user, or a worker, needs support, the dispatcher manager module can be used to route the remote user to a desired subject matter expert. Conversely, an expert user can initiate a session to provide feedback to a remote user. The routing can occur in either a manned or unmanned mode. A user can request a specific connection based on a downloaded address list. In addition, using support information transferred along with a remote session request, rules can be established in the video messaging system that will allow the directory manager software to automatically route the session request to one or more appropriate users.

Using a video camera connected to a remote computer having direct connection or dial-up connection or an Internet access capability, the remote user client 603 provides high quality video across low bandwidths. This client allows the user to record streaming video images on the computer screen, and then share those images in real time with other video messaging system users in the video messaging system session. Anyone connected to the session has the capability of communication concurrently with the streaming video either by sound or by text messaging. Furthermore, the video images can be enhanced with annotation. In the annotation, any session user adds shapes (circles, boxes, lines, text) on the video as a visual cue (sign). Different colors are used so determine who is doing the annotation. Video may be captured with or without annotation information for files. In addition to video, any user can take snapshots of the video stream at any time. Snapshots can be annotated. Given that a remote client is designed to be used by a field user on a remote device, this interface is designed to be simplistic and small enough to fit without cumbersome navigation and controls. Both the video and the snapshots can be stored in a central repository 605 for sharing/use by all parties. This also supports the submission of video and snapshot captures to the electronic performance support system for inclusion into the electronic performance support system repository 305 as part of the overall procedure library.

The expert user client 604 is similar to that is used by the remote client with one exception. As the expert tends to be sitting in their office at a work station, the expert client will be more full featured. The interface will include multiple concurrent integrated windows. One window will display a streaming video or a snapshot currently being reviewed. Another optional window will display current session participants with annotation color coding. Another optional window will display a current list of support files which will include all stored video streams and snapshot captures. Another optional window will display the current work order from the computerized maintenance system and electronic performance support system procedure and step information.

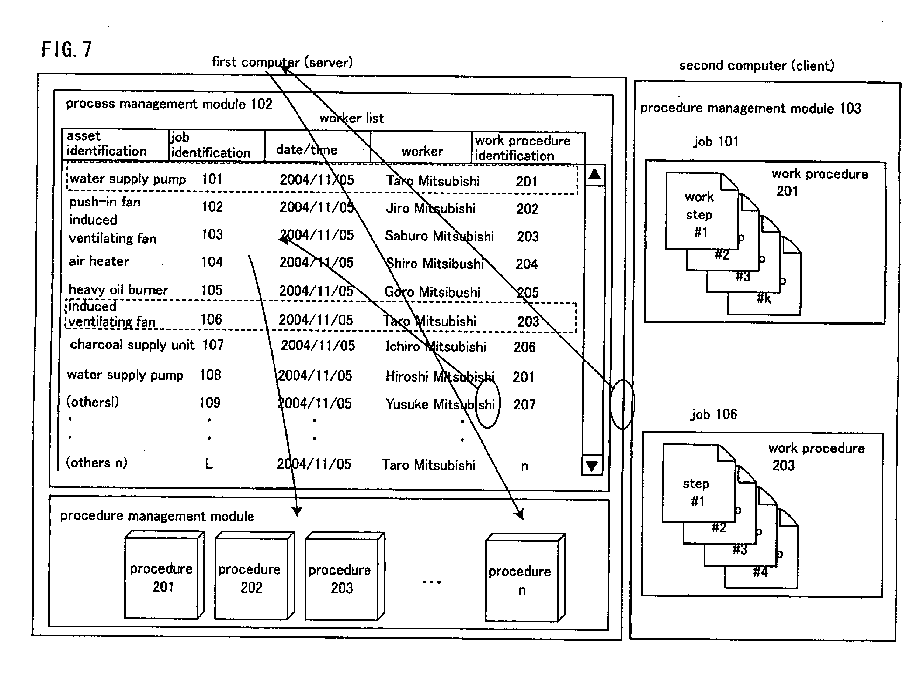

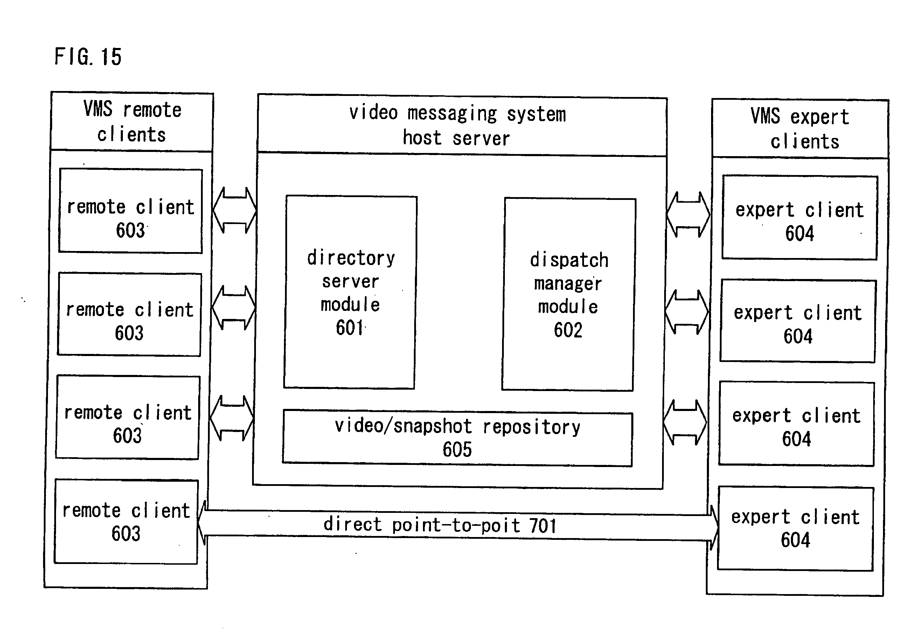

Corresponding to Fig.7 of the invention of the prior application, Fig. 15 shows a video messaging system provided with a point-to-point client communication. Fig.15 shows an alternative of Fig.14 and differs in that when a remote client and an expert client have initiated a session, the directory server provides IP (Internet Protocol) information to allow the remote and expert clients to directly communicate 701, thus potentially improving performance. In Fig. 14, even after the remote and expert clients identifies through the video messaging system server each other's identifier IP information that is necessary for identifying each other on the network for communication purpose, all the information communication goes through the video messaging system server, which delays the communication. Conversely, in Fig.15, all the information communication does not go through the video messaging system server and information exchange is performed through the direct communication 701 between the remote client 603 and the expert client 604 after the remote client and expert client are provided with each other's IP information by the video messaging server. Compared with Fig. 14, the communication delay is reduced for not going through the video messaging system host server, which improves communication performance. For reference, IP is an identifier for uniquely identifying on computer networks a computer, more precisely an individual network interface device provided in the computer, connected to the networks. Other identifiers for uniquely identifying computers on the network can be used for communication among multiple computers on the network using other, not the IP-based, protocols, existing or developed in the future.

The interfaces among the core software systems are an important aspect of both the invention of the prior application and the present invention. In Fig.1, these interfaces are represented by the interface 100 between the process management module and procedure management module, the interface 106 between the process management module and form management module, the interface 107 between the procedure management module and form management module, the inter face 108 between the procedure management module and visual information management module, the interface 109 between the process management module and visual information management module, and the interface 111 between the visual information management module and form management module. These interfaces are hereafter described.

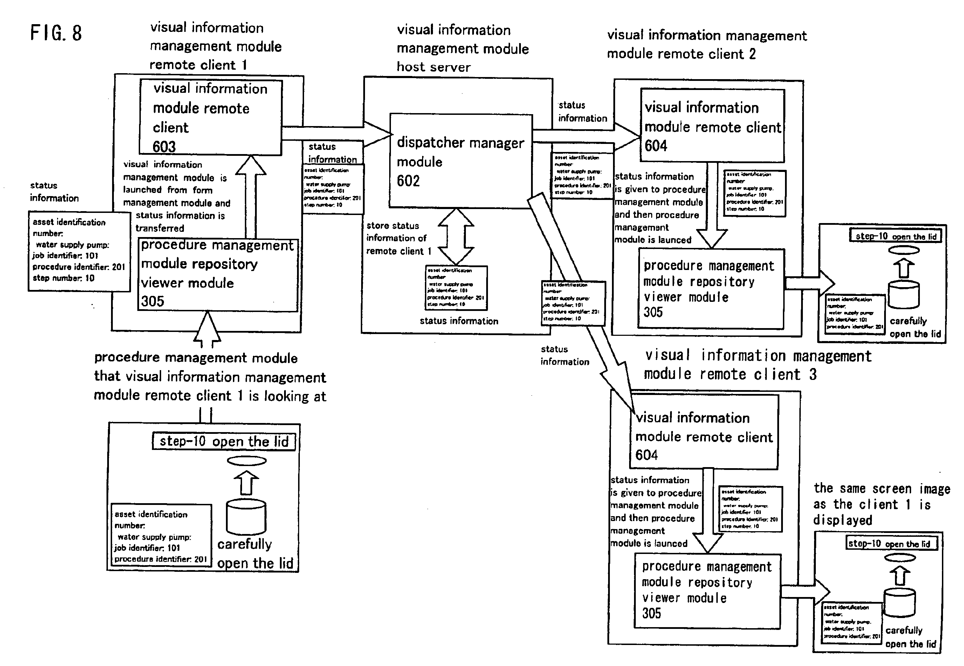

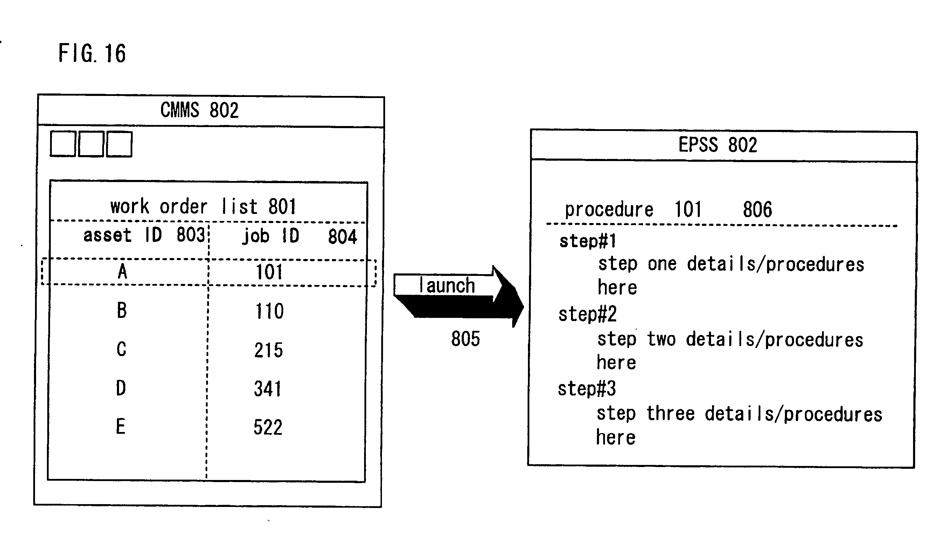

Corresponding to Fig.8 of the invention of the prior application, Fig.16 shows a preferred embodiment of the user interface from the computerized maintenance system to the electronic performance support system. A primary function of the computerized maintenance system software is to generate work orders. Work orders are used to define a specific/standard job to be executed on a specific asset (for example, oil exchange of a designated vehicle). Typical work orders will have plain job description and, probably, a simple list of steps on how to perform the job.

On the other hand, the electronic performance support system software provides a specific set of procedural instructions for generic job descriptions. The instructions are independent of assets (for example, the electronic performance support system may provide particular steps to exchange oil of a particular type of vehicles) . When the electronic performance support system software is launched, the user is presented with an entire set of topics (procedures) available to the user.

Both in the invention of the prior application and in the present invention, these two software programs are closely coupled. In a preferred embodiment, the user is presented with a work orders list 801 generated for users and stored in the computerized maintenance system 802. This list at least provides the primary identification information for the work orders, such as work order identification, asset identification 803, and a standard job number 804. From this list, the user can launce the electronic performance support system software 805 and directly proceeds to a proper job instruction 806 in the electronic performance support system 807 for a particular work order in the list.

In embodiments of the present invention based on the invention of the prior application, specifically, data exchange is performed between a first computer and a second computer as shown in Fig.7.
For example, the process management module of the first computer schedules maintenance works to be performed on November 5, 2004 in which asset identification, time, worker, and work procedure identification are specified for each job identification. Then, for example Taro Mitsubishi launches the procedure management module on his mobile computer and downloads his works on that day from the host computer. Works with the job IDs 101 and 106 are downloaded along with work instructions 201 and 203 that are designated to the job IDs. In this way, Taro Mitsubishi, or a worker, can perform asset maintenance with reference to the work instructions downloaded on his mobile computer.

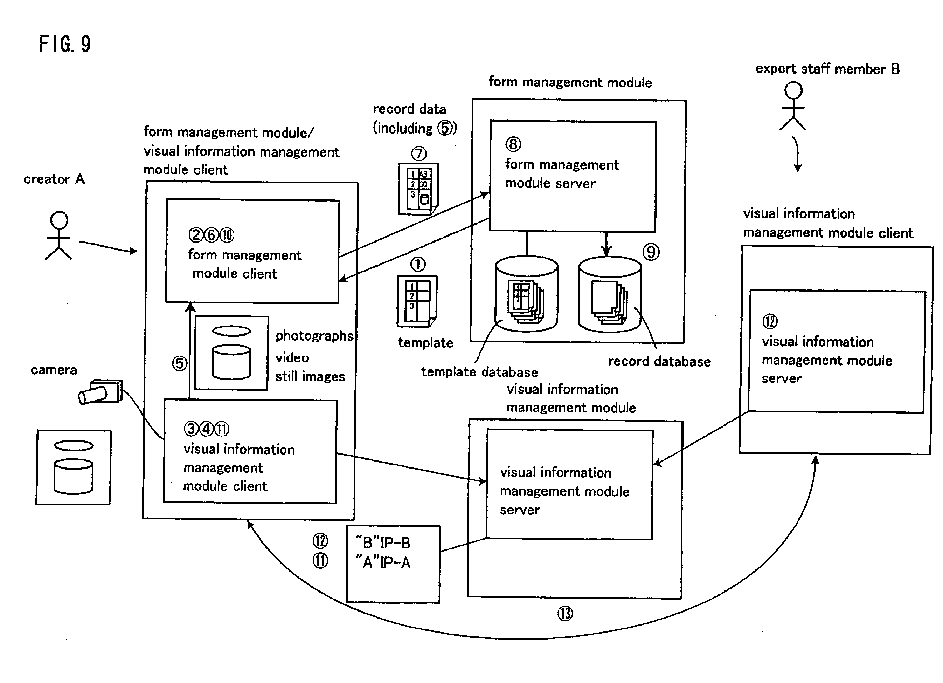

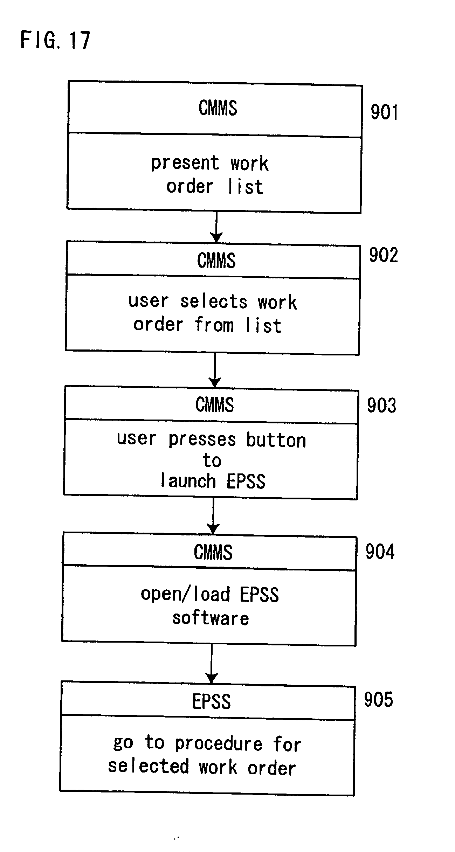

Corresponding to Fig.9 of the invention of the prior application, Fig.17 is a process flowchart to show a preferred embodiment of the interface from the computerized maintenance system to the electronic performance support system shown in Fig. 16. A work order list is provided in the computerized maintenance system. Within the computerized maintenance system, the user can access the work order list 901. The user selects a particular work order in the list in step 902. The user launches the electronic performance support system from the computerized maintenance system by pressing a key or a button in step 903. The electronic performance support system software is opened or loaded in step 904. Finally, a proper work instruction in the repository of the electronic performance support system is launched in step 905.

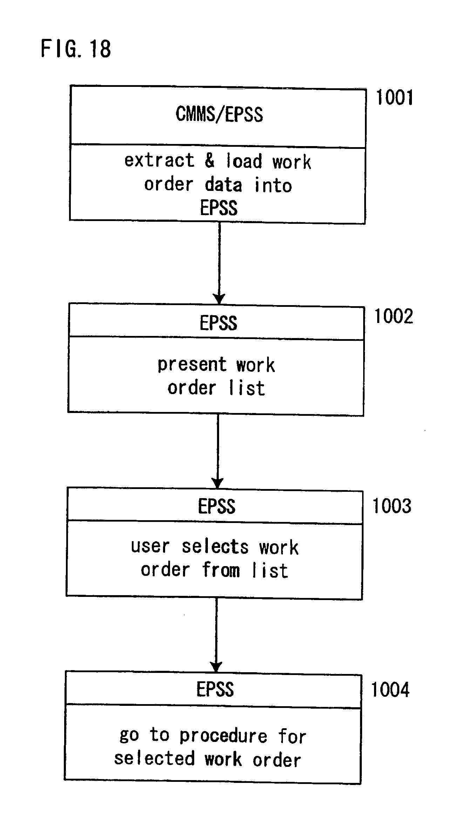

Corresponding to Fig.10 of the invention of the prior application, Fig.18 is a process flowchart to show another embodiment of the interface from the computerizedmaintenance system to the electronic performance support system. A work order lists is provided in the electronic performance support system. The interface exists between the electronic performance support system and computerized maintenance system. Work order list data is extracted in real time, on demand, or in a scheduled batch mode in step 1001. The work order list data is loaded into the library or database of the electronic performance support system. The work order list loaded in the electronic performance support system can be presented to end users (the step 1003), whereby the user selects a particular work order in the list and proceeds to a proper procedural instruction in the repository of the electronic performance support system (the step 1004).

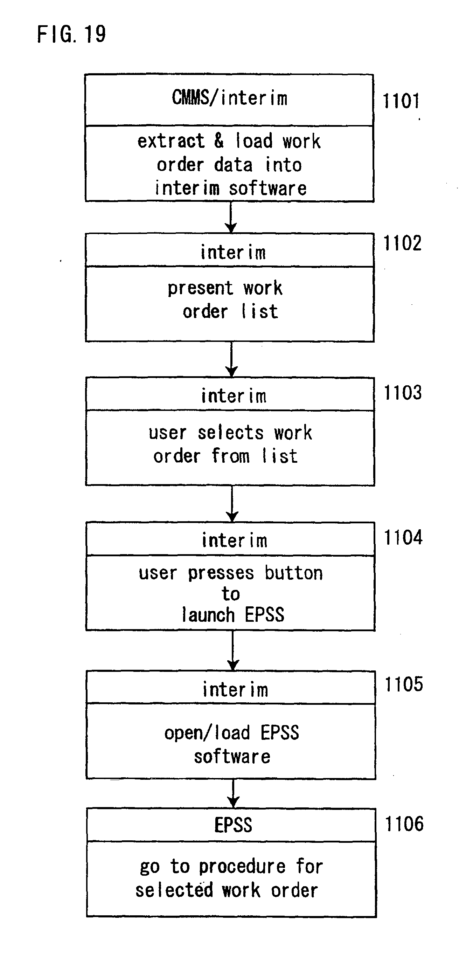

Corresponding to Fig.11 of the invention of the prior application, Fig.19 is a process flowchart which shows another embodiment of the interface from the computerized maintenance system to the electronic performance support system. A work order lists are provided in the third software. The interface exists between the third software and the computerized maintenance system. Work order list data is extracted in real time, on demand, or in a scheduled batch mode and is loaded into the memory or database of the third software (the step 1001). Within the third software, the user can access the work order list (the step 1002). The user selects a particular work order in the list in step 1003. The user executes the electronic performance support system start function stored in the software in step 1104. Then, the user can open or launch the electronic performance support system software in step 1105. Finally, the user can proceed to a proper work instruction in the repository of the electronic performance support system in step 1106.

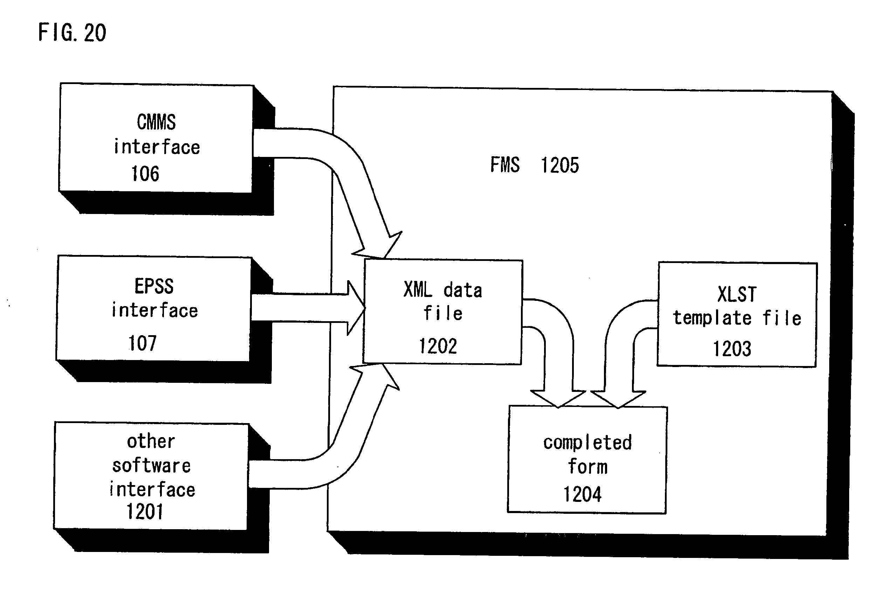

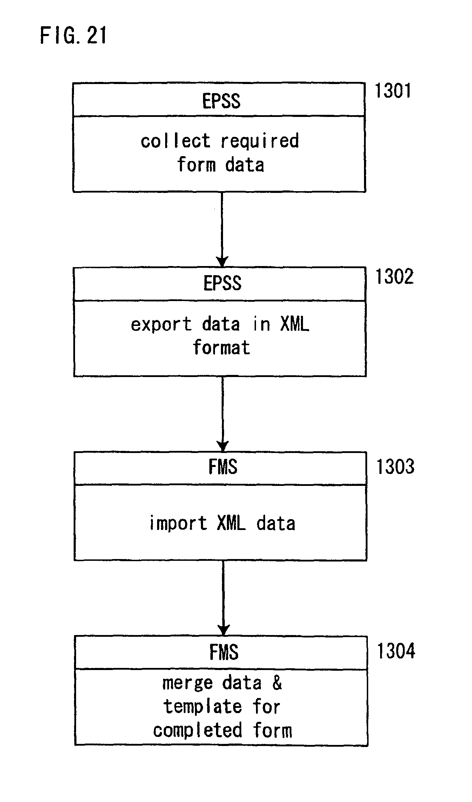

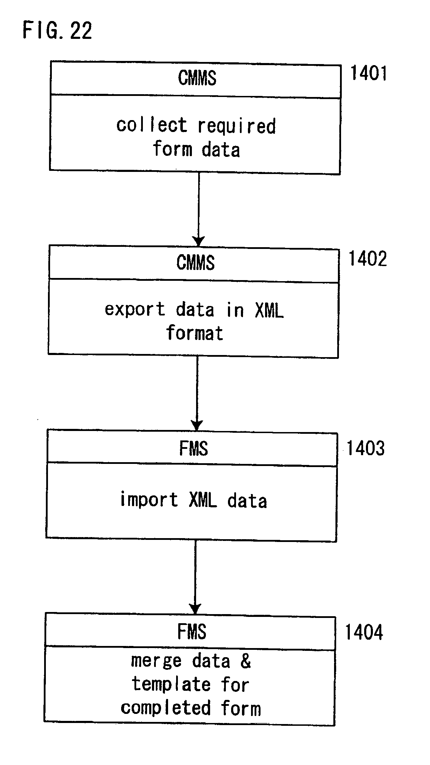

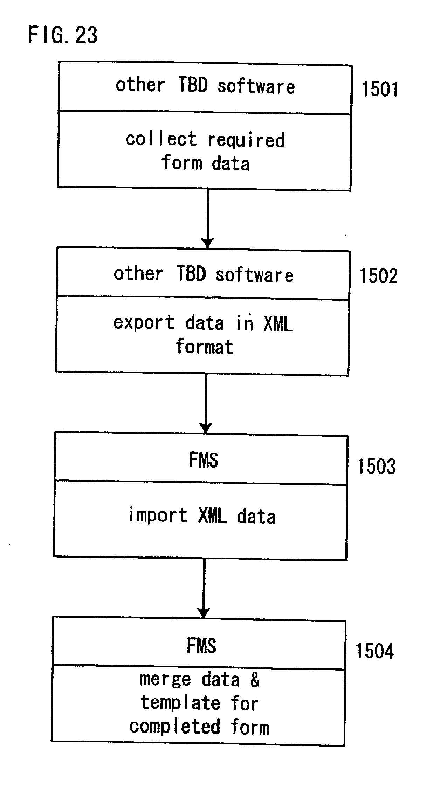

Corresponding to Fig.12 of the invention of the prior application, Fig.20 is a system configuration to show the interface between the computerized maintenance system, form management system, and other software and the formmanagement system. As described above, neither the computerized maintenance system nor the electronic performance support system software readily supports specific work orders or inspection data collection and pre-determined form output required by user organizations of the system, regulatory agencies, or supervisory authorities. This deficiency is addressed by integrating form templates with data where a sub-element of the form management system is used to utilizes collected data to output a completed form in a proper format, as shown in Fig.22 for the computerized maintenance system (which corresponds to Fig.14 of the invention of the prior art application), as shown in Fig.21 for the electronic performance support system 107 (which corresponds to Fig. 13 of the invention of the prior art application), or as shown in Fig.23 for other software system 1202 (which corresponds to Fig. 15 of the invention of the prior art application) .

Corresponding to Fig.13 of the invention of the prior application, Fig.21 is a process flowchart which shows the interface from the electronic performance support system to the form management system as described in reference to Fig.20. The electronic performance support system software can be enhanced to collect inspection and maintenance data necessary for the steps following the step 1301. Collection points will be defined as part of an electronic performance support system development module and tagged with appropriate, unique data mapping tags of the form management system. Upon collection, the electronic performance support system is enhanced to export the collected data into a proper XML memory format (the step 1302), which is exported or made available for use in the form management system (the step 1303). For further enhancement of the electronic performance support system, for example, XML templates are made available to the electronics performance support system from the form management system so that the electronic performance system users can preview the forms prior to submission (the step 1304).

Corresponding to Fig. 14 of the invention of the prior application, Fig.22 is a process flowchart to show the interface from the computerized maintenance system to the form management system as described with reference to Fig.20. The computerized maintenance system can be enhanced to collect inspection and maintenance data necessary for the work order (the step 1401). These collection points are formed as part of the set up function of the computerized maintenance system and tagged with appropriate and unique data mapping tags of the form management system. Upon collection, the computerized maintenance system is enhanced to export collected data into a proper XMLmemory format (the step 1402), which is exported or made available for use in the form management system (the step 1403). For further enhancement of the computerized maintenance system, for example, XML templates are made available to the computerized maintenance system from the form management system so that the computerized maintenance system users can preview the forms prior to submit (the step 1304).

Corresponding to Fig.15 of the invention of the prior application, Fig.23 is a process flowchart to show the interface 1201 from other proper software to the form management system as described with reference to Fig.20. Another software module can be used for collecting inspection and maintenance data necessary for the work order (the step 1501). Collection points will be formed as part of the set up function of the software and tagged with appropriate, unique data mapping tags of the form management system. Upon collection, the software exports collected data into a proper XML memory format (the step 1502), which is exported or made available for use in the form management system (the step 1503). Other enhancements of the software include, for example, a function to make XML templates available to the computerized maintenance system from the formmanagement system so that the software users can preview the forms prior to submission (the step 1504).

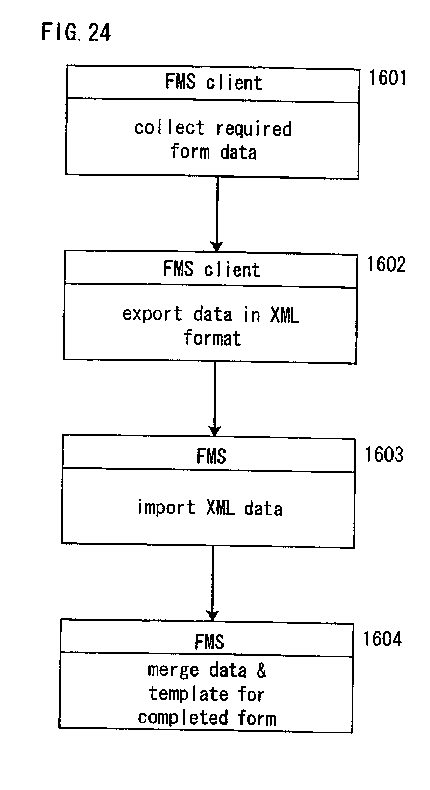

Corresponding to Fig.16 of the invention of the prior application, Fig.24 shows another embodiment of the client interface of the form management system (stand-alone). In this embodiment, the form management system client is a stand-alone type. The user collects necessary form data in step 1601. The software is used to collect data, preview forms, confirm data, and export final completed forms to the host form management system for final review, approval, printing, and archiving/storage in step 1602. Data is available for import in step 1603. The data and template are merged to produce a completed form in step 1604.

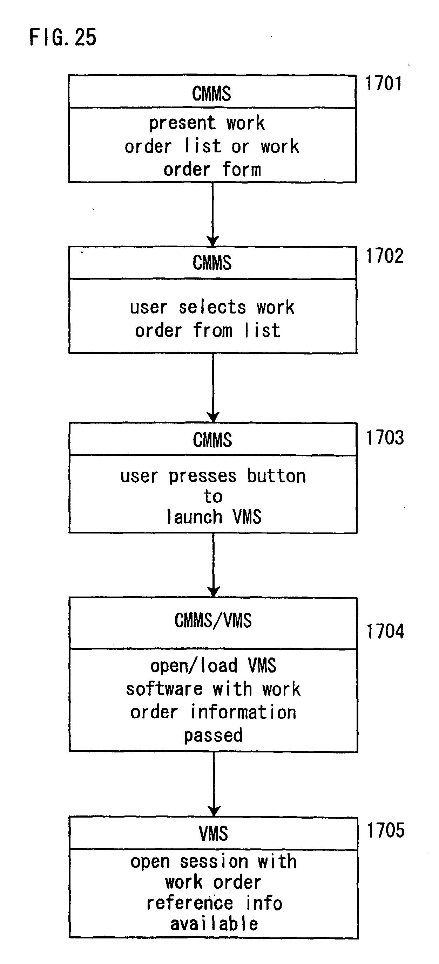

Corresponding to Fig. 17 of the invention of the prior application, Fig.25 shows a preferred embodiment of the interface from the computerized maintenance system to the video messaging system. A major shortcoming of the video messaging system software is to have no session-related supporting information other than that of who the participants are when a session is started. It is significantly efficient for the computerized maintenance system or electronic performance support system status information to be made available to the session when a session is started. The video messaging system session is launched in the computerized management system software in step 1701. When launched, the session is initiated using the current user information and current work order information transferred to the video messaging system (the step 1702). This includes asset identification information and job identification information. The information can be used by the video messaging system dispatcher (either an individual or rules) for inviting all proper parties to the session and is available for complete review upon joining a session. The user launches the video messaging system by de-selecting a button or activating an icon in step 1703. The video messaging system software, opened and loaded with the work order information, is transferred to the videomessaging system in step 1704. The session is opened using available work order reference information in the step 1705.

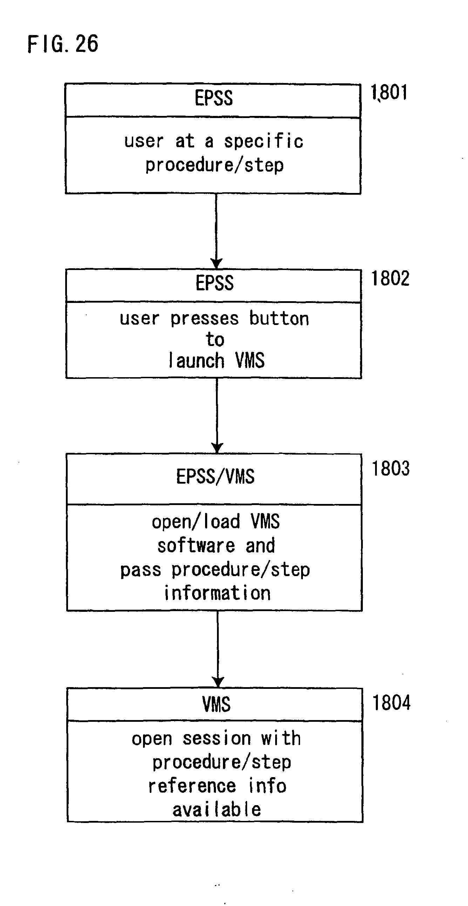

Corresponding to Fig.18 of the invention of the prior application, Fig.26 shows a preferred embodiment of the interface between the electronic performance support system and video messaging system. The video messaging system session is launched in the electronic performance support system software in step 1801. When launched in step 1802, the session is initiated with the current user information and current work order information transferred to the video messaging system. In addition, along with the previous step routing information, the current electronic performance support system procedure and steps are also transferred to the video messaging system for further enhancing information available to all session participants (step 1803). This includes asset identification information and job identification information. The information can be used by the video messaging system dispatcher (either an individuals or rules) for inviting all proper parties to the session and is available to all review upon joining a session, (the step 1804). Once participating in a session, other video messaging system users should be able to launch the electronic performance support system session and use the electronic performance support system to directly proceed to a proper procedure and step. In this way, multiple parties can view the same data/reference material.

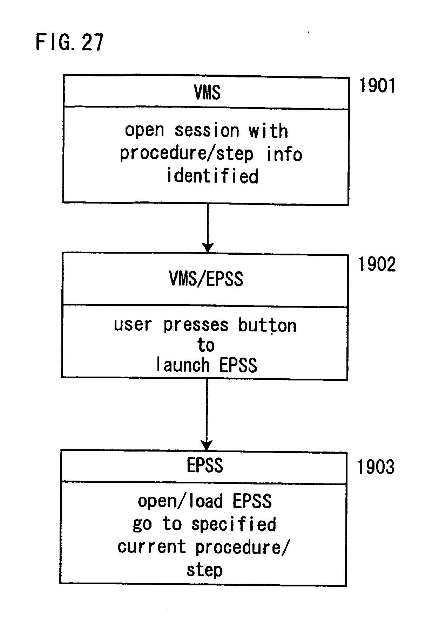

Corresponding to Fig.19 of the invention of the prior application, Fig.27 shows a preferred embodiment of the interface from the video messaging system to the electronic performance support system. A session is opened using identified procedure/step information in step 1901. Once participating in a session, other video messaging system users should be able to launch the electronic performance support system session (the step 1902) and use the electronic performance support system to directly proceeds to a proper procedure and step (the step 1903). In this way, multiple parties can view the same data/reference material.

Fig. 8 specifically shows the above functions of the present invention in their relationships in conjunction with the host computer and mobile computer based on the invention of the priority application. It is assumed by way of example that a remote client 1 of the visual information management module performs safety control work of a water supply pump at a site and two remote clients (expert staff members) support him. The visual information management module remote client 1 is currently looking at his screen through the repository viewer of the procedure management module where a water supply pump as an asset identifier, a job identifier 101, a procedure identifier 201 and its procedure number (step) 10 are displayed. When the visual information management module remote client makes a connection to the visual information management module host server, the status information is given to the dispatcher manager module. The status information includes "the asset identifier: water supply pump, job identifier: 101, procedure identifier: 201 and its process number (step) 10." Then, remote clients 2 and 3 (expert staff members) of the visual information management module make connection to the visual information management module host server and start communication with the visual information management module remote client 1 who has already been connected so as to establish a session. The status information of the visual information management module remote client 1 is given to the visual information management module remote clients 2 and 3 by the dispatcher manager module. Receiving the status information, the visual information management module remote clients 2 and 3 launch the repository viewer of the procedure management module, giving the received status information. Consequently, the visual information management module remote clients 2 and 3 have the same screen of the procedure management module as the visual information management module remote client 1. Therefore, they can view on their screens the same procedure that the visual information management module remote client 1 is working on. Through the communication among the visual information management module remote clients 1, 2, and 3, they can discuss while viewing the same procedure management module screen, whereby the work support information can be precisely conveyed. There may be multiple visual information management module remote clients 1 who need work support in a similar procedure. There may also be multiple visual information management module remote clients 2 and 3 (expert staff members) who support work.

Fig.9 shows the mutual interface and information exchange when the maintenance or inspection system of the present invention comprises the visual information management module and the form management module.

First, the procedure of recording through the form management module is described, where video, capturing still images/sound are captured through the visual information management module and recorded in certain forms in the form management module (a digital camera function).
(1) The form management module client retrieves a recording form from the form management module server (for example a XML format form);
(2) The worker records his work by inputting measurements in the form through the form management module client;
(3) In this case, photographs (with comments/annotation) must be recorded along with data recording. Therefore, photographs are taken through the visual information management module client;
(4) Comments are added to the photographs taken;
(5) The visual information management module client sends the photographs to the form management module client;
(6) The form management module client embeds the photographs sent in pre-determined positions of the form;
(7) The worker transfers data to the form management module server from the form management module client after the certain form is filled in with values; and
(8) The form management module server stores the received data in a record database.

Acquiring assistance from expert staff members about the procedure using the video communication function of the visual information management module during the recording through the form management module client is described hereafter (remote work assistance function).
(9) In the middle of the work above, the worker may need to ask an expert staff member for opinions about filling the form (for example, maintenance for corrosion and cracks of a bridge);
(10) The visual management module client is launched through the form management module client;
(11) The visual information management module client that receives the request registers its own IP address to the visual information management module server;
(12) According to the above (11), the IP address of an expert staff member who has already logged in (who has registered and his name is on the directory) is received; and
(13) The worker A and expert staff member B start video communication for assistance in which the still images captured by the worker A may be shared by the worker A and expert staff member B and annotated (written in) by both of them.

With the basic system configuration above, the present invention achieves the following basic functions and has commercial applications.

Maintenance support function
The maintenance support function includes four major functions, a work instruction related function, a work support function, a work result record/report writing function, and a work result secondary usage function. The work instruction related function assigns part or all of the maintenance/safety control work of an asset to be supervised to a proper worker, electronically store the assignment information, issues it to the mobile computer of the worker to accurately direct the worker and let him perform it. It also includes a management function to record the progress with time marks once the work starts and check whether the assigned work is in progress or completed by referring to the data.

The work support function relates to works assigned to the workers. It provides to workers related information that may become necessary through the work, such as a series of work procedures, related drawings and various documents, or previous work history, which are mutually linked in the manner that they can be immediately electronically viewed, much faster than providing these as paper-based printed information. It also provides a means to access to information electrically stored in the mobile computer or stored in the server from the mobile computer through various network infrastructures, whereby significantly reducing the load of carrying a large amount of printed matters. In case the worker cannot obtain information necessary for his work by accessing and viewing information electrically stored or stored somewhere electrically reachable, the video communication function which becomes available through various network infrastructures can be used to send video, still images, or sound from the site to an experienced worker at a remote headquarters design department or a remote support center. Further, still images once captured can be freely annotated, whereby the part to be discussed through communication is precisely conveyed. The identifier information of a work procedure and drawings that the field worker is looking at is simultaneously sent to the experiences worker. As soon as the video communication is initiated, the expert staff member can share the same work procedure and drawings.

The work result record/report writing function provides a means to access the server database where work conditions recorded through the work above and the asset conditions to be maintained/safety controlled, provide a mean to view the completed maintenance/safety control work results, and display the information in a desired order, and a function to output paper-based printed matters as report for in-house or client approval in any required form. Printed information includes, besides characters/numbers information, other printable information that is recorded during the work, such as still images, sketches, and hand-writing memorandums. Video, voice memo, sound are not printable. However, they can be freely retrieved on the computer for reproduction/viewing.

Finally, the work result secondary use function is a function to allow for the secondary use of information stored in the server database through maintenance/safety control work, such as processing it using other computer programs, outputting it as trend graphs, or comparing it with the designed values.

Contents creation/correction function
The contents creation/correction function includes four major functions, a work procedure creation function, a record/report form creation function, a related drawings/documents association function, and a contents version control function.

The work procedure creation function breaks down part or all of a series of maintenance /safety control works into minimum units or work steps and compile those work steps into a sequence of works to present the part or all of the maintenance work to the worker step by step.

The record/report form creation function designs an electronic data entry screen image that is used when maintenance/safety control status has to be recorded during the work procedure, and creates links between the screen image and database so that information at different information input regions on the screen image is stored in an appropriate database. This function can be used as a screen image for information input during the work and as a function to edit a report layout in making a printed report.

The related drawings/documents association function associates information, such as the work procedure, electronic data entry screen images, drawings that may become necessary in the work procedure, photographs, video, still images, sound, animation, various manuals, and other external information viewing system, parts control, resources order systems, and immediately retrieves them through the work step screen. Finally, the contents version control function stores all the creation time/corrector' s identifiers for the created work procedure and related information. When the information is changed even of only slightly, the time/corrector's identifier/changed contents are all recorded.

User control function
The user control function includes two major functions, a user registration function and an authorization function.

The user registration function creates/corrects/cancels/deletes information (name, affiliation, age, device in use, other information, user ID, password, permission to use the registered information, password expiration, registrant information) of the users who use the system covered by the present patent.

The authorization function limits/authorizes the registered user to the use of available functions in the system covered by the present invention as a user right. Here the following rights are granted: worker, field overseer, contents creator, and system administrator rights. The worker right is granted to workers who mainly use the mobile computer and perform maintenance/safety control work at the site. Basically, it allows for viewing of the work procedure, recording of the asset condition, recording of video, sound, video communication, and recording of the work progress and reporting to the field overseer. The field overseer right allows for issuing of work instructions to workers, the work instruction including maintenance/safety control asset identifier, work procedure identifier, job identifier, and worker identifier. The field overseer right allows for viewing of the screen image to view the work progress report from the worker and for approving or rejecting the reported work results and directing the redo of the work. The contents creator can mainly create work procedures that are viewed by worker during the work and associate the work procedures with record forms or the work procedures with a variety of related information (drawings, various manuals, video, still images). The contents creator also supervises the version of the created contents. For the use on multiple servers, the contents creator right allows for the use of a version control function to keep the latest version of contents on the servers and all workers' mobile computers. The contents creator receives and reviews matters that workers discover at the site. In this way, the contents creator can reflects the discoveries of the field workers on the contents. Finally, the system control right allows for new registration / contents change / cancellation / deletion of registered users of the present system.

With the specific functions above, the present invention has the following efficacy in embodiments thereof.

Improved maintenance work performance and quality
For example, maintenance/safety control workers can promptly view the latest work order, work procedure, and related information on theirmobile computer from the work site. They are free from carrying thick manuals or making copies of necessary pages for each work. Necessary information is immediately presented to the worker with a minimum operation. The worker saves time for turning pages of a thick manual. Work records are directly electrically created at the side. This eliminates the process that paper-based record forms are taken to the site, filled by hand-writing, brought back to the office, and input to the administrative computer. The overall work time is reduced. Furthermore, human errors, such as input error to the computer from the paper, are prevented.

Workers can always perform the works based on the latest information.
The frequency of redo as a result of operation errors based on the use of paper-based manuals, such as the use of old version manuals at the site compared with those at the design department, is significantly reduced. This is primarily realized only when the process management module/procedure management module and the form management module are linked.

Quick reaction to accidental inconvenience and reduction in wasteful cost
Unlike regular inspections, when an asset to be maintained suddenly becomes out of order, immediate recovery work is required. However, for example, a worker who happens to be there does not have an enough skill and there is no sufficient information, it takes a tremendous time to take a primary action. For example, the field condition is investigated and the result is sent to the headquarters, where skilled workers of the headquarters design department discuss and give directions to the site. In other cases, a skilled worker who is capable of resolving the problem is further sent where insufficient information exchange is concerned. Meantime, the customer is increasingly frustrated since the time goes by fast without the problem being resolved. On the contrary, the system of the present invention allows the object to be identified and shared using video, still images photography, video communication, and the two-way annotation function for still images, which are offered by the mobile computer of the worker. Even if the field worker does not have the knowledge of focusing points for comprehending the problem, a remote skilled worker can give him proper directions and help him to comprehend the situation. In addition,forthe recovery workitself, the procedure management module functions that are linked to the video communication visual information management module can be used to send the location of an electronic procedure to be referred to and drawings to the field worker from the headquarters. Therefore, the field worker who is otherwise not skillful enough to resolve the problem can resolve the problem to a certain extent with remote work assistance. Hence, chances of dealing with prolonged communication or sending another worker are significantly reduced. Quick response is realized and reduction in traveling cost can be expected. This function is realized only when the visual information management module and the procedure management module are linked.

Paperless and elimination of entry error/transcript error
Furthermore, all maintenance/safety control information is electronically recorded and administrated directly from the site. This significantly reduces the volume of printed matters, contributing the paperless. Errors in transcription from record forms to computers can be eliminated.

Ensured transparency of works and prevention of data forge
For all work, the time mark is automatically recorded along with the worker identifier in conjunction with the execution and recording of a work step. It is obvious at a glance that who did what and when. This ensures the transparency of works. In addition, the user administrate function strictly administrates the system user right to prevent users from freely forging data.

Enhancing the skill up of workers in a short term and the skilled worker equivalent work quality of unskilled worker
Improvement in field work efficiency and quality of maintenance work largely depends on long-term experiences of skilled workers and technical know-how based on them. Traditionally, a skilled worker attends and trains an inexperienced worker for a long time through actual work for technical succession. However, recently, skilled workers have been aging and retiring before their skill is fully handed down. The number of skilled worker significantly is declining. On the other hand, more maintenance workers are in demand because of an increasing number of maintenance objects. However, their training does not catch up with it and a sufficient number of personnel for an increasing number of facilities are not available. The present system provides to workers the procedures and linkage information to their related information, which are used to be in the head of skilled workers and now are computerized and stored in real time and on-line. The work procedure is presented to the worker with a variety of information (drawings, various documents, video, still images, photographs, sound, animation), which can be used as self-learning material for work contents. The worker can efficiently learn by himself at the site in the absence of a skilled worker. Furthermore, when a learner has a doubt at the site, he can use the video communication to ask a skilled person. A remote learning assist function is also realized.

The above embodiments of the present invention are thus to be considered in all aspects as illustrated and not restrictive, the scope of the present invention being indicated by the appended claims rather than by the forgoing description. All changes that come within the meaning and range of equivalency of the claims are intended to be embraced therein.

### [Brief explanation of the drawings]

Fig. 1 is a conceptual diagram of the software functions that form the maintenance or inspection system.
Fig.2 is a conceptual diagram of the functions of the maintenance or inspection system that is suitable for medium scale assets.
Fig.3 is a conceptual diagram of the functions of the maintenance or inspection system that is suitable for small scale assets.
Fig.4 is a conceptual diagram of the functions of the maintenance or inspection system in accordance with asset scale.
Fig.5 is a diagram to explain the contents of a job identification ID.
Fig. 6 is a diagram to explain the contents of a work identification ID of the procedure management module server.
Fig . 7 is a diagram to explain information exchange between the process management module and procedure management module.
Fig.8 is a diagram to explain information exchange among multiple visual information management modules.
Fig. 9 is a diagram to explain information exchange between the form management module and visual information management module.
Fig.10 is a conceptual diagram of the computerized maintenance management system module functions.
Fig. 11 is a conceptual diagram of the electronic performance support
system module functions.
Fig. 12 is a conceptual diagram of the form management system module functions.
Fig.13 is a conceptual diagram of the formmanagement system functions provided with the coupled electronic performance support system/form management system client.
Fig.14 is a conceptual diagram of the video messaging system functions.
Fig. 15 is a conceptual diagram of thevideomessaging system functions with the point-to-point client communication.
Fig.16 is a diagram of a preferred embodiment of the interface from the computerized maintenance system to the electronic performance support system.
Fig.17 is a process flowchart of a preferred embodiment of the interface from the computerizedmaintenance system to the electronic performance support system.
Fig.18 is a process flowchart of an altered embodiment of the interface from the computerizedmaintenance system to the electronic performance support system.
Fig. 19 is a process flowchart of another embodiment of the interface from the computerized maintenance system to the electronic performance support system.
Fig.20 is a process flowchart of the interface between the form management system and the computerized maintenance system/electronic performance support system.
Fig. 21 is a process flowchart of another embodiment of the interface from the electronic performance support system to the form management system.
Fig. 22 is a process flowchart of another embodiment of the interface from the computerized maintenance system to the form management system.
Fig. 23 is a process flowchart of another embodiment of the interface from other software to the form management.
Fig.24 is a process flowchart of another embodiment of the form management system stand-alone/client interface.
Fig.25 is a preferred embodiment of the interface from the computerized maintenance system to the video messaging system.
Fig. 26 is a preferred embodiment of the interface between the electronic performance support system and the video messaging system.
Fig.27 is a preferred embodiment of the interface from the video messaging system to the electronic performance support system.

### [Legend]

101 host server
150 client
102 process management module (computerized maintenance system)
103 procedure management module (electronic performance support system)
104 visual information management module (video messaging system)
105 form management system (form control system)
106 process management module/form management module interface
107 procedure management module/form management module interface
108 procedure management module/video messaging system interface
109 process management module/video messaging system interface
110 process management module/procedure management module interface
111 video messaging system/form management module interface

## Claims

1. A process management system for work orders comprising:
a host computer (101) provided with a process management module (102), a procedure management module (103), a visual information management module (104); and
a computer (150) for a worker, wherein:
the host computer is configured to be connected to at least one such computer for a worker and to assign work orders that are generated and scheduled by the process management module and the procedure management module;
a repository of the process management module contains work process management information for each asset to which a job identification ID is uniquely assigned;
the job identification ID designates an asset identification, a worker, a date/time and a work procedure identification ID;
a repository of the procedure management module contains a work procedure designated by the job identification ID;
a repository of the visual information management module contains visual information that includes drawings related to the work procedure identification ID as supporting information; and
the computer for the worker is configured to take the work orders from the host computer using the process management module and the procedure management module, to hold a list of the assigned work orders, and further to supply the visual information that includes the drawings related to the work procedure identification ID as the supporting information from the host computer using a function of the visual information management module.

2. The process management system according to Claim 1, wherein:
the system comprises a remote client (604) computer for an expert staff connected to the host computer;
the repository of the visual information management module contains the visual information that includes video clips, animations and images related to the work procedure identification ID as the supporting information; and
the visual information management module is adapted to allow a same view as that on the computer for the worker to be displayed on the remote client computer to enable the expert staff in a remote location to provide a work assistance.

3. The process management system according to Claim 1, wherein:
the host computer includes a form management module (105) in addition to the process management module, the procedure management module and the visual information management module; and
the form management module is configured to allow data resulting from completion of the work procedures to be performed by the worker to be written into the host computer.

4. The process management system according to Claim 3, wherein:
a repository of the form management module contains an electronic form template which records and accumulates documents required to be created; and
the system is configured such that data collected in the process management module, the procedure management module and the visual information management module, and data exported or extracted therefrom are combined to automatically create an existing paper-based form which contains the written data.

5. A process management method for work orders using a process management system which includes a host computer (101) provided with a process management module (102), a procedure management module (103) and a visual information management module (104), wherein:
the host computer is configured to be connected to at least one computer (150) for a worker;
a repository of the process management module contains work process management information for each asset to which a job identification ID is uniquely assigned;
the job identification ID designates an asset identification, a worker, a date/time and a work procedure identification ID;
a repository of the procedure management module contains work procedures designated by the job identification ID;
a repository of the visual information management module contains visual information that includes drawings related to the work procedure identification ID;
work orders generated and schedule by the process management module and the procedure management module of the host computer are assigned to workers; and
the computer for the worker takes the work orders from the host computer using the process management module and the procedure management module, holds a list of the assigned work orders, and further supplies the visual information that includes the drawings related to the work procedure identification ID from the host computer using a function of the visual information management module.

6. The process management method according to Claim 5, wherein:
the host computer is further connected to a remote client (604) computer for an expert staff;
the repository of the visual information management module contains the visual information that includes a video clip, an animation and an image related to the work procedure identification ID; and
the visual information management module is used to allow a same view as that on the computer for the worker to be displayed on the remote client computer to enable the expert staff in a remote location to provide a work assistance.

7. The process management method according to claim 6, wherein:
the host computer includes a form management module (105) in addition to the process management module, the procedure management module and the visual information management module; and
the form management module is configured to allow data resulting from completion of the work procedures to be performed by the worker to be written into the host computer.

8. The process management method according to claim 7, wherein:
a repository of the form management module contains an electronic form template which records and accumulates documents required to be created; and
data collected in the process management module, the procedure management module and the visual information management module, and data exported or extracted therefrom are combined to automatically create an existing paper-based form which contains the written data.

## Patentansprüche

1. Prozessmanagement-System für Arbeitsaufträge, aufweisend:
einen Host-Computer (101), der mit einem Prozessmanagement-Modul (102), einem Prozedurmanagement-Modul (103), einem Visuelle-Information-Management-Modul (104) ausgestattet ist; und
einen Computer (150) für einen Arbeiter, wobei:
der Host-Computer für einen Anschluss an wenigstens einen solchen Computer für einen Arbeiter und für ein Zuordnen von Arbeitsaufträgen, die vom Prozessmanagement-Modul und vom Prozedurmanagement-Modul erzeugt und festgelegt werden, konfiguriert ist;
ein Repository des Prozessmanagement-Moduls Arbeitsprozessmanagement-Information für jede Anlage enthält, der eine Job-Identifikations-ID einzigartig zugeordnet ist;
die Job-Identifikations-ID eine Anlagen-Identifikation, einen Arbeiter, ein Datum/eine Uhrzeit und eine Arbeitsprozedur-Identifikations-ID zuordnet;
ein Repository des Prozedurmanagement-Moduls eine Arbeitsprozedur enthält, die von der Job-Identifikations-ID zugeordnet ist;
ein Repository des Visuelle-Information-Management-Moduls visuelle Information enthält, die auf die Arbeitsprozedur-Identifikations-ID bezogene Zeichnungen als unterstützende Information umfasst;
und
der Computer für den Arbeiter konfiguriert ist für ein Nehmen der Arbeitsaufträge vom Host-Computer unter Anwendung des Prozessmanagement-Moduls und des Prozedurmanagement-Moduls, für ein Halten einer Liste der zugeordneten Arbeitsaufträge und ferner für ein Bereitstellen der visuellen Information, die die auf die Arbeitsprozedur-Identifikations-ID bezogenen Zeichnungen als unterstützende Information vom Host-Computer bei Anwenden einer Funktion des Visuelle-Information-Management-Moduls umfassen.

2. Prozessmanagement-System nach Anspruch 1, wobei:
das System einen Remote-Client-(604)-Computer für einen Expertenstab, der mit dem Host-Computer verbunden ist, aufweist;
das Repository des Visuelle-Information-Management-Moduls die visuelle Information enthält, die Videoclips, Animationen und Bilder mit Bezug zur Arbeitsprozedur-Identifikations-ID als die unterstützende Information; und
das Visuelle-Information-Management-Modul dafür ausgelegt ist, ein Anzeigen der gleichen Ansicht wie die auf dem Computer für den Arbeiter auf dem Remote-Client-Computer zu gestatten, damit der Expertenstab die Möglichkeit hat, von einem entfernten Standort aus eine Arbeitsunterstützung bereitzustellen.

3. Prozessmanagement-System nach Anspruch 1, wobei:
der Host-Computer ein Formular-Management-Modul (105) zusätzlich zum Prozessmanagement-Modul,
Prozedurmanagement-Modul und Visuelle-Information-Management-Modul umfasst; und
das Formular-Management-Modul konfiguriert ist, um ein Schreiben von aus der Fertigstellung der vom Arbeiter auszuführenden Arbeitsprozeduren resultierenden Daten in den Host-Computer zu gestatten.

4. Prozessmanagement-System nach Anspruch 3, wobei:
ein Repository des Formular-Management-Moduls eine elektronische Formularvorlage enthält, die Dokumente, die erstellt werden müssen, erfasst und sammelt; und
das System derart konfiguriert ist, dass im Prozessmanagement-Modul, Prozedurmanagement-Modul und Visuelle-Information-Management-Modul gesammelte Daten sowie von dort exportierte oder extrahierte Daten kombiniert werden, um automatisch ein papierbasiertes Formular zu erstellen, das die geschriebenen Daten enthält.

5. Prozessmanagement-Verfahren für Arbeitsaufträge, benutzend ein Prozessmanagement-System, welches einen Host-Computer (101) umfasst, der mit einem Prozessmanagement-Modul (102), einem Prozedurmanagement-Modul (103) und einem Visuelle-Information-Management-Modul (104) bereitgestellt ist, wobei:
der Host-Computer für einen Anschluss an wenigstens einen Computer (150) für einen Arbeiter konfiguriert ist;
ein Repository des Prozessmanagement-Moduls Arbeitsprozessmanagement-Information für jede Anlage enthält, der eine Job-Identifikations-ID einzigartig zugeordnet ist;
die Job-Identifikations-ID eine Anlagen-Identifikation, einen Arbeiter, ein Datum/eine Uhrzeit und eine Arbeitsprozedur-Identifikations-ID zuordnet;
ein Repository des Prozedurmanagement-Moduls eine Arbeitsprozedur enthält, die von der Job-Identifikations-ID zugeordnet ist;
ein Repository des Visuelle-Information-Management-Moduls visuelle Information enthält, die auf die Arbeitsprozedur-Identifikations-ID bezogene Zeichnungen umfasst;
Arbeitsaufträge, die vom Prozessmanagement-Modul und vom Prozedurmanagement-Modul des Host-Computers erzeugt und festgelegt werden, Arbeitern zugeordnet werden; und
der Computer für den Arbeiter Arbeitsaufträge vom Host-Computer bei Anwenden des Prozessmanagement-Moduls und des Prozedurmanagement-Moduls nimmt, eine Liste der zugeordneten Arbeitsaufträge hält und ferner die visuelle Information, die die auf die Arbeitsprozedur-Identifikations-ID bezogenen Zeichnungen umfasst, vom Host-Computer bei Anwenden einer Funktion des Visuelle-Information-Management-Moduls bereitstellt.

6. Prozessmanagement-Verfahren nach Anspruch 5, wobei:
der Host-Computer ferner mit einem Remote-Client-(604)-Computer für einen Expertenstab verbunden ist;
das Repository des Visuelle-Information-Management-Moduls die visuelle Information enthält, die einen Videoclip, eine Animationen und ein Bild mit Bezug zur Arbeitsprozedur-Identifikations-ID als die unterstützende Information umfasst; und
das Visuelle-Information-Management-Modul dafür benutzt wird, ein Anzeigen der gleichen Ansicht wie die auf dem Computer für den Arbeiter auf dem Remote-Client-Computer zu gestatten, um dem Expertenstab zu ermöglichen, von einem entfernten Standort aus eine Arbeitsunterstützung bereitzustellen.

7. Prozessmanagement-Verfahren nach Anspruch 6, wobei:
der Host-Computer ein Formular-Management-Modul (105) zusätzlich zum Prozessmanagement-Modul, Prozedurmanagement-Modul und Visuelle-Information-Management-Modul umfasst; und
das Formular-Management-Modul konfiguriert ist, um ein Schreiben von aus der Fertigstellung der vom Arbeiter auszuführenden Arbeitsprozeduren resultierenden Daten in den Host-Computer zu gestatten.

8. Prozessmanagement-Verfahren nach Anspruch 7, wobei:
ein Repository des Formular-Management-Moduls eine elektronische Formularvorlage enthält, die Dokumente, die erstellt werden müssen, erfasst und sammelt; und
im Prozessmanagement-Modul, Prozedurmanagement-Modul und Visuelle-Information-Management-Modul gesammelte Daten sowie von dort exportierte oder extrahierte Daten kombiniert werden, um automatisch ein papierbasiertes Formular zu erstellen, das die geschriebenen Daten enthält.

## Revendications

1. Système de gestion de processus pour des ordres de travail comprenant :
un ordinateur hôte (101) pourvu d'un module de gestion de processus (102), d'un module de gestion de procédure (103), d'un module de gestion d'informations visuelles (104) ; et
un ordinateur (150) pour un employé, dans lequel :
l'ordinateur hôte est configuré pour être connecté à au moins un tel ordinateur pour un employé et pour attribuer des ordres de travail qui sont générés et planifiés par le module de gestion de processus et le module de gestion de procédure ;
un référentiel du module de gestion de processus contient des informations de gestion de processus de travail pour chaque bien auquel un ID d'identification de tâche est attribué de manière unique ;
l'ID d'identification de tâche désigne une identification de bien, un employé, une date/une heure et un ID d'identification de procédure de travail ;
un référentiel du module de gestion de procédure contient une procédure de travail désignée par l'ID d'identification de tâche ;
un référentiel du module de gestion d'informations visuelles contient des informations visuelles qui comportent des dessins relatifs à l'ID d'identification de procédure de travail en tant qu'informations de support ; et
l'ordinateur pour l'employé est configuré pour recevoir les ordres de travail à partir de l'ordinateur hôte en utilisant le module de gestion de processus et le module de gestion de procédure, pour maintenir une liste des ordres de travail attribués, et en outre pour fournir les informations visuelles qui comportent les dessins relatifs à l'ID d'identification de procédure de travail comme étant les informations de support à partir de l'ordinateur hôte en utilisant une fonction du module de gestion d'informations visuelles.

2. Système de gestion de processus selon la revendication 1, dans lequel :
le système comprend un ordinateur client distant (604) pour un personnel expert connecté à l'ordinateur hôte ;
le référentiel du module de gestion d'informations visuelles contient les informations visuelles qui comportent des clips vidéo, des animations et des images relatifs à l'ID d'identification de procédure de travail comme étant les informations de support ; et
le module de gestion d'informations visuelles est adapté pour permettre à une même vue que celle sur l'ordinateur pour l'employé d'être affichée sur l'ordinateur client distant de manière à permettre au personnel expert dans un emplacement distant de fournir une assistance de travail.

3. Système de gestion de processus selon la revendication 1, dans lequel :
l'ordinateur hôte comporte un module de gestion de formulaire (105) en plus du module de gestion de processus, du module de gestion de procédure et du module de gestion d'informations visuelles ; et
le module de gestion de formulaire est configuré pour permettre à des données résultant de l'achèvement des procédures de travail devant être exécutées par l'employé d'être écrites dans l'ordinateur hôte.

4. Système de gestion de processus selon la revendication 3, dans lequel :
un référentiel du module de gestion de formulaire contient un modèle de formulaire électronique qui enregistre et accumule des documents devant être créés ; et
le système est configuré de sorte que des données recueillies dans le module de gestion de processus, le module de gestion de procédure et le module de gestion d'informations visuelles, et des données exportées ou extraites de ceux-ci sont combinées pour créer automatiquement un formulaire à base de papier existant qui contient les données écrites.

5. Procédé de gestion de processus pour des ordres de travail utilisant un système de gestion de processus qui comporte un ordinateur hôte (101) pourvu d'un module de gestion de processus (102), d'un module de gestion de procédure (103) et d'un module de gestion d'informations visuelles (104), dans lequel :
l'ordinateur hôte est configuré pour être connecté à au moins un ordinateur (150) pour un employé ;
un référentiel du module de gestion de processus contient des informations de gestion de processus de travail pour chaque bien auquel un ID d'identification de tâche est attribué de manière unique ;
l'ID d'identification de tâche désigne une identification de bien, un employé, une date/une heure et un ID d'identification de procédure de travail ;
un référentiel du module de gestion de procédure contient des procédures de travail désignées par l'ID d'identification de tâche ;
un référentiel du module de gestion d'informations visuelles contient des informations visuelles qui comportent des dessins relatifs à l'ID d'identification de procédure de travail ;
des ordres de travail générés et planifiés par le module de gestion de processus et le module de gestion de procédure de l'ordinateur hôte sont attribués aux employés ; et
l'ordinateur pour l'employé reçoit les ordres de travail à partir de l'ordinateur hôte en utilisant le module de gestion de processus et le module de gestion de procédure, maintient une liste des ordres de travail attribués, et fournit en outre les informations visuelles qui comportent les dessins relatifs à l'ID d'identification de procédure de travail à partir de l'ordinateur hôte en utilisant une fonction du module de gestion d'informations visuelles.

6. Procédé de gestion de processus selon la revendication 5, dans lequel :
l'ordinateur hôte est en outre connecté à un ordinateur client distant (604) pour un personnel expert ;
le référentiel du module de gestion d'informations visuelles contient les informations visuelles qui comportent un clip vidéo, une animation et une image relatifs à l'ID d'identification de procédure de travail ; et
le module de gestion d'informations visuelles est utilisé pour permettre à une même vue que celle sur l'ordinateur pour l'employé d'être affichée sur l'ordinateur client distant de manière à permettre au personnel expert dans un emplacement distant de fournir une assistance de travail.

7. Procédé de gestion de processus selon la revendication 6, dans lequel :
l'ordinateur hôte comporte un module de gestion de formulaire (105) en plus du module de gestion de processus, du module de gestion de procédure et du module de gestion d'informations visuelles ; et
le module de gestion de formulaire est configuré pour permettre à des données résultant de l'achèvement des procédures de travail devant être exécutées par l'employé d'être écrites dans l'ordinateur hôte.

8. Procédé de gestion de processus selon la revendication 7, dans lequel :
un référentiel du module de gestion de formulaire contient un modèle de formulaire électronique qui enregistre et accumule des documents devant être créés ; et
des données recueillies dans le module de gestion de processus, le module de gestion de procédure et le module de gestion d'informations visuelles, et des données exportées ou extraites de ceux-ci sont combinées pour créer automatiquement un formulaire à base de papier existant qui contient les données écrites.
